# EUROPEAN PATENT SPECIFICATION

(11) **EP 1 384 067 B1**
(45) Date of publication and mention of the grant of the patent: **18.07.2007**
(21) Application number: 02729089.9
(22) Date of filing: 02.05.2002
(51) Int. Cl.: B01L 3/00, G01N 27/26, G01N 27/447, G01N 33/53, B01F 5/00, C12Q 1/68

(54) **CONCENTRATION AND PURIFICATION OF ANALYTES USING ELECTRIC FIELDS**
KONZENTRATION UND REINIGUNG VON ANALYTEN MIT ELEKTRISCHEN FELDERN
CONCENTRATION ET PURIFICATION D'ANALYTES AU MOYEN DE CHAMPS ELECTRIQUES

(30) Priority: 02.05.2001 US 288268 P
(43) Date of publication of application: 28.01.2004
(60) Divisional application: 07106533.8
(73) Proprietor: Applera Corporation, Foster City, CA 94404 (US)
(72) Inventor: HARROLD, Michael, San Mateo, CA 94402 (US); NORDMAN, Eric, S., Palo Alro, CA 94301 (US)
(74) Representative: Williamson, Brian
(86) International application number: PCT/US2002/013721
(87) International publication number: WO 2002/088321

(56) References cited:
- WO-A-00/67007
- WO-A-96/04547
- US-A- 5 059 294
- US-A- 5 454 472
- US-A- 5 800 690
- US-A- 5 842 787
- US-A- 5 957 579
- US-A- 5 965 001
- US-A- 6 001 229
- US-A- 6 010 608
- US-A- 6 129 826
- US-A- 6 150 119

## Description

### FIELD OF THE INVENTION

The present invention relates to the concentration and purification of analytes in samples. More particularly, the present invention relates to a device and method for the concentration and purification of analytes, such as polynucleotides (e.g., DNA and RNA), using plural electric fields (AC and DC).

### BACKGROUND OF THE INVENTION

In many techniques of molecular biology, it is important to have high-quality samples. Results are generally enhanced in PCR, sequencing, fragment analysis, and so forth, when the subject polynucleotide materials are separated from potentially interfering contaminants. Thus, it is often desirable to purify and concentrate the polynucleotides of interest in samples prior to analysis.

In analyses utilizing laser-induced fluorescence (LIF) detection techniques, typical DNA samples may contain, in addition to dye-labeled DNA: salts, residual enzyme, DNA oligonucleotides, dNTP's, dye-labeled ddNTP's, and/or surfactants. It is generally desirable to remove all species except the subject dye-labeled DNA fragments. However, even partial purification can be useful. Thus, at a minimum, it is often desirable to remove species that are present at higher concentration and that could pose an interference to the analysis. The species of greatest concern are often the dye-labeled ddNTP's and salts.

Present-day methods used to reduce such interferences and to concentrate DNA include size exclusion chromatography and alcohol precipitation. Both of these techniques are time consuming and prone to failure. Moreover, size exclusion chromatography does not result in concentration of the DNA relative to the starting sample, and the degree of concentration achievable using alcohol precipitation is modest at best.

### SUMMARY OF THE INVENTION

An aspect of the present invention relates to a device for the concentration and purification of analytes, such as polynucleotides (e.g., DNA and RNA) using plural electric fields (AC and DC).

In various embodiments, the device comprises: (i) an elongate channel including a first end and a second end; (ii) at least two electrodes, each electrode being disposed near one of said ends; and (iii) at least one energy source disposed for electrical communication with said electrodes and operable to simultaneously apply a DC potential along at least a portion of said channel and an AC potential along at least a portion of said channel. The channel, in an embodiment, is configured to cause an electric field established by application of said potentials to form a field gradient at one or more regions within the channel having a field strength that, upon loading a sample containing a polarizable analyte into one of said channel ends, attracts or repulses the polarizable analyte.

Another aspect of the present invention relates to a method for the concentration and purification of analytes, such as polynucleotides (e.g., DNA and RNA) using plural electric fields (e.g., AC and DC).

In an embodiment, the method comprises: (i) loading said sample into a channel device including an elongate channel; and (ii) applying AC and DC potentials along at least portions of the channel, with the potentials being applied simultaneously for at least a portion of said applying, such that one or more field gradients are formed within the channel, said field gradients causing the target analyte in the sample to migrate to, and concentrate at, one or more localized regions within the channel. In an embodiment, step (ii) is effective to reduce the concentration of contaminants relative to the concentration of target analyte, thereby producing a purified analyte.

A further aspect of the present invention relates to a device for the concentration and purification of analytes. In an embodiment, the device comprises: (i) a primary channel having a first end and a second end, (ii) a loading region disposed for fluid communication with said first end, (iii) a first collection region disposed for fluid communication with said second end, (iv) a secondary channel having an inlet end disposed for fluid communication with said primary channel near said second end (e.g., at a region nearer said second end than said first end), and a second collection region disposed for fluid communication with an outlet end of said secondary channel; (v) at least three electrodes, each electrode being disposed near a respective one of said loading, first-collection, and second-collection regions; and (vi) at least one energy source disposed for electrical communication with said electrodes and operable to simultaneously apply a DC potential along at least a portion of both of said channels and an AC potential along at least a portion of said primary channel. In an embodiment, the primary channel is configured to cause an electric field established by application of said potentials to form a field gradient at plural regions within the channel, said field gradients having a field strength that, upon loading a sample containing a polarizable analyte into said loading region, attracts or repulses the polarizable analyte.

A further aspect of the present invention relates to a device for the concentration and purification of analytes. In an embodiment, the device comprises: (i) an elongate channel including a first end and a second end; (ii) at least two electrodes, each electrode being disposed near one of said ends; (iii) at least one energy source disposed for electrical communication with said electrodes and operable to simultaneously apply a DC potential along at least a portion of said channel and an AC potential along at least a portion of said channel; and (iv) wall structure defining boundaries for said channel, with the wall structure including one or more surface features; wherein said surface features are configured to induce field gradient formation at defined locations within the channel upon application of an electric field established by application of said potentials, so that, upon loading a sample containing a polarizable analyte into said channel, the polarizable analyte is focused by said field to one or more defined locations within the channel.

Yet another aspect of the present invention relates to a device for purifying a sample containing a target polarizable analyte and one or more contaminants. In an embodiment, the device comprises: (i) means for loading said sample into a channel device including an elongate channel; and (ii) means for applying AC and DC potentials along at least portions of the channel, with the potentials being applied simultaneously for at least a portion of said applying, such that one or more field gradients are formed within the channel, said field gradients causing the target analyte in the sample to migrate to, and concentrate at, one or more localized regions within the channel. In an embodiment, said means for applying is effective to reduce the concentration of contaminants relative to the concentration of target analyte, thereby producing a purified analyte.

In various embodiments, AC and DC fields are used to concentrate and purify DNA in a microfabricated device. Such concentration and purification can be integrated with an analysis system, or it can be effected away from an analyzer.

The present invention can find use, for example, in any circumstance where it is desirable to concentrate and purify a polarizable analyte from a complex mixture of other potentially interfering species. An example of such an application is the concentration and purification of DNA fragments from an unpurified DNA sequencing reaction.

These and other features and advantages of the present invention will become better understood with reference to the following description, drawings, and appended claims.

### BRIEF DESCRIPTION OF THE DRAWINGS

The structure and manner of operation of the invention, together with the further objects and advantages thereof, may best be understood by reference to the following description taken in conjunction with the accompanying drawings, in which identical reference numerals identify similar elements, and in which:
Figure 1 is a partially schematic perspective view from one side of a microfabricated channel device, useful in practicing the present invention.
Figures 2A, 2B, and 2C schematically illustrate aspects of a T-format injection arrangement in a microfabricated channel device.
Figure 3 schematically shows electric field concentration proximate corner edges in a microfabricated channel device.
Figure 4 depicts exemplary channel geometries, as contemplated by the present invention, effective for concentration of a field gradient. Figures 4a and 4b depict constriction of the channel width. In addition, Figures 4c and 4d depict the inclusion of sharp corners effective to enhance the field gradients that are generated when an electric field is applied.
Figure 5 is a schematic of an AC circuit, suitable for use in the present invention.
Figures 6, 7, and 8 schematically depict a first example of the present invention. DNA is initially concentrated into small bands in side arms of a channel device (Figure 6). Next, a portion of the concentrated DNA is moved into a cross-channel intersection region of the device (Figure 7). Then, the concentrated DNA portion is introduced into a separation arm of the device (Figure 8).
Figures 9 and 10 schematically depict a second example of the present invention. DNA is concentrated into a small band in an arm near a cross-channel intersection region of a channel device (Figure 9). Once concentrated, the DNA is introduced into a separation arm of the device (Figure 10).
Figures 11 and 12 schematically depict a third example of the present invention. DNA is concentrated into a small band in an arm near a cross-channel intersection of a channel device (Figure 11). Once concentrated, the DNA is introduced into a separation arm of the device (Figure 12).
Figure 13 schematically illustrates a channel device having a channel with a sawtoothed or serrated profile along one side wall, as contemplated by an embodiment of the present invention.
Figures 14A, 14B, and 14C are partial, enlarged views of various embodiments of side-wall surface-feature geometries, which can be incorporated in a channel device such as that of Figure 13.
Figure 15 illustrates another embodiment of a channel device having a channel with a saw-toothed or serrated profile along one wall.
Figure 16 schematically illustrates a channel device having electrodes embedded in wall structure bounding a channel, with the electrodes being disposed for electrical communication with an AC power source.
Figure 17 schematically illustrates a channel having a width or cross-sectional area that varies along the channel's length.
Figure 18 schematically illustrates a mask useful for forming a pinch channel according to various embodiments of the present invention.
Figure 19 is a perspective view of a cross-sectional portion of a channel including a pinch point according to various embodiments of the present invention.
Figures 20a - 20d schematically depict the concentration and movement of a band of DNA in a device according to various embodiments of the present invention having a pinch point channel.
Figure 21 is a graph showing a sawtooth waveform that can be used with the pinch point channel device and run at 5kHz at a 1,650 volt peak-to-peak voltage.
Figure 22 is a schematic illustration of electrical circuitry that can be used in conjunction with a pinch point channel device according to various embodiments of the present invention.
Figures 23a - 23d are CCD images of the concentration and movement of a DNA band through a pinch point in a pinch point channel device, referred to herein as "trap and release."
Figure 24 is a graph showing the brightness of concentrated bands of DNA determined by CCD signal, versus time for a series of dilutions of labeled DNA fragments.
Figure 25 shows the brightness of concentrated DNA bands determined by CCD signal, versus time, as affected by sodium chloride concentration.
Figure 26 is a graph showing the DC bias voltage needed to hold a concentrating band in place, versus sample ionic strength.
Figures 27a - 27c schematically illustrate the concentration and movement of a DNA band through a double T pinch point device according to various embodiments of the present invention.
Figures 28a - 28d are CCD images of the release of a concentrated DNA band from a pinch trap (Figure 28a), the turning of the concentrated DNA band from a side arm having a pinch trap into a main separation channel (Figures 28b and 28c), and the fully injected DNA band in the separation channel (Figure 28d).
Figure 29 is a screenshot containing electropherograms showing the enrichment of the 443nt DNA fragment relative to unconcentrated dCTP after separation of a pinch trap device according to various embodiments of the present invention.

### DETAILED DESCRIPTION OF THE INVENTION

Reference will now be made in detail to various embodiments of the invention, examples of which are illustrated in the accompanying drawings. While the invention will be described in conjunction with various embodiments, it will be understood that they are not intended to limit the invention to those embodiments.

Unless stated otherwise, the following terms and phrases as used herein are intended to have the following meanings:

The term "channel" as used herein refers to an elongate, narrow passage or other structure (e.g., tubes, grooves, etc.) capable of supporting a volume of separation medium and/or buffer solution; e.g., such as is used in carrying out electrophoresis. The geometry of a channel may vary widely. For example, a channel can have a circular, oval, semi-circular, semi-oval, triangular, rectangular, square, or other cross-section, or a combination thereof. Channels can be fabricated by a wide range of technologies, including microfabrication techniques.

The term "capillary," as used herein, has the same meaning as "channel." Exemplary "capillary" structures include, for example, a lumen of an elongated tube, or a groove formed in a chip, wafer or plate.

The term "channel device" refers to any structure including a channel, and particularly those adapted at least in part for carrying out electrophoresis. Channel devices can take the form of microfabricated devices (e.g., a grooved plate, chip, or other substrate) or capillary tube devices, among others.

The term "concentrated" or "purified" means that a material is removed from an original, or starting, state or environment. For example, a material is said to be "purified" when it is present in a particular composition in a higher concentration than exists as it is found in a starting sample. For example, where a starting sample comprises a polynucleoticle in a crude cell lysate, the polynucleotide can be said not to be purified, but the same polynucleoticle separated from some or all of the coexisting materials in the cell lysate is purified. A nucleic acid is said to be purified, for example, if it gives rise to essentially one band upon electrophoresis.

As used herein, the term "sample zone" or "analyte zone" refers to a collection of molecules comprising a subset of sample or analyte components having similar electrophoretic migration velocities such that the molecules of a sample zone or analyte zone migrate as a defined zone. In the limit, such a zone is made up of molecules having identical electrophoretic migration velocities. Sample zones and analyte zones are often referred to as "bands."

As used herein, the term "separation medium" or "separation matrix" refers to a medium in which an electrophoretic separation of sample components can take place. Separation media typically comprise several components, at least one of which is a charge-carrying component, or electrolyte. The charge-carrying component is usually part of a buffer system for maintaining the separation medium at a defined pH. Media for separating polynucleotides, proteins, or other biomolecules having different sizes but identical charge-frictional drag ratios in free solution, further include a sieving component. Such sieving component is typically composed of a cross-linked polymer gel, e.g., cross-linked polyacrylamide or agarose (Sambrook), or a polymer solution, e.g., a solution of polyacrylamide, hydroxyethyl cellulose, and the like (Grossman; Madabhushi).

### General

Generally, the present invention relates to a channel device and method wherein AC and DC electric fields are employed to concentrate/purify polarizable analytes, such as polynucleotides (e.g., DNA and RNA).

The channels of the device of the invention can be any of those as defined above, or equivalents. In one embodiment, the channels are formed on a glass or plastic substrate, such as a plate, wafer, or chip, by microfabrication techniques known in the art, e.g., photolithographical and/or wet-chemical etching procedures, laser ablation, electroforming, microcontact printing, microstamping, micromolding, microcasting, micromachining, engraving, and/or embossing techniques, to name a few. Woolley et al, Dolnik et al, and Backhouse et al (US-A-2006081474), for example, discuss materials and fabrication techniques which the skilled artisan can employ in making the devices of the present invention. In another embodiment, the separation channels comprise one or more elongated capillary or micro-capillary tubes made from an electrically insulating material, e.g., fused silica, quartz, silicate-based glass, such as borosilicate glass, phosphate glass, alumina-containing glass, and the like, or other silica-like material(s).

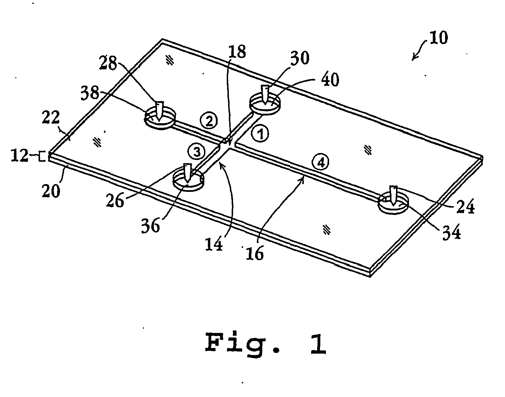

Figure 1 depicts general features of one type of device in which the present invention can be embodied. The channel device of Figure 1, indicated generally by the reference numeral 10, comprises a substrate 12 in which channels, such as 14 and 16, are defined so as to intersect at right angles at a junction, denoted at 18. More particularly, substrate 12 is comprised of lower and upper plates, 20 and 22 respectively, with abutted confronting faces. Lower plate 20 is provided with elongate grooves, each of roughly semi-circular or semi-oval cross-section, that in part define boundaries for channels 14, 16. The lower face of plate 22 is substantially planar, and, when disposed against plate 20 as shown, further defines boundaries for channels 14, 16. Particularly, in the illustrated arrangement, the grooves of plate 20 define lower (floor) and side walls or boundaries of each channel 14, 16 and the lower surface of plate 22 provides an upper wall or ceiling (boundary) for channels 14, 16.

Several electrodes are provided, schematically indicated as 24, 26, 28 and 30; each being disposed for electrical communication with a reservoir, such as 34, 36, 38 and 40, respectively. The reservoirs are defined by small through-holes; drilled, etched, punched, or otherwise formed through upper plate 22. Each of reservoirs 34, 36, 38, 40 is disposed for fluid communication with a respective end of one of channels 16, 18, as shown.

For reasons that will become apparent, it is convenient to refer to channels 14, 16 as comprising four segments or arms, denoted as 1, 2, 3 and 4 throughout the figures. More particularly, segments 1, 2, and 3 are referred to herein as "side arms," or "short arms;" and segment 4 is referred to herein as a "separation arm" or "main arm."

The channels can be any suitable length, and any suitable profile. In one exemplary configuration, main arm 4 is 50 micrometers wide (measured at its top, from one lateral side wall to an opposing lateral side wall) and 20 micrometers deep (measured from its upper ceiling or top wall to a lowermost region of its bottom wall or floor), with a length of 8.5 centimeters. The side arms can also be any suitable geometry, including non-straight geometries, and any suitable length. In this embodiment, each of side arms 1, 2, 3 has the same cross-sectional profile (width and depth) as the long channel, and a length of 1 centimeter. One suitable channel device for use in the present invention, having such dimensions, is the Standard Microfluidic Chip (Simple Cross, MC-BF4-SC) from Micralyne Inc. (Edmonton, Alberta, Canada). Multiple cross-channel or other channel arrangements can be provided on a single chip or plate, as desired.

A cross-channel configuration, such as depicted in Figure 1, is often referred to in the art as a "T" format (the "T" representing the intersection of the channels).

It should be appreciated that the present invention is not limited to the construction depicted in Figure 1, but rather many device configurations are possible and can be used in the context of the present invention. For example, while only one T-format cross-channel arrangement is shown in Figure 1, any reasonable number of such arrangements can be provided on a substrate. In one embodiment, both the upper and lower plates are provided with complimentary groove configurations that are aligned with one another so that corresponding upper and lower grooves cooperate to define one or more channels. In another embodiment, a plurality of spacer strips are placed between planar, parallel, opposed surfaces of confronting plates. The spacer strips, in this embodiment, define the distance separating the opposed plate surfaces, and the region between adjacent pairs of spacers defines, at least in part, each of one or more channels. Particularly, one or both of the lateral sides of each spacer define channel side boundaries and the planar confronting plate surfaces define upper and lower boundaries.

Instead of providing grooves in a lower plate which are covered by an upper plate, such as shown in Figure 1, a channel device can include an upper plate with grooves formed along its lower surface, which can be placed over a planar upper surface of a lower plate. Moreover, although the channel device shown in Figure 1 is disposed with its major planar surfaces disposed in a substantially horizontal fashion, the device could instead be disposed with its major planar surfaces disposed substantially vertically, or tilted at a desired angle. These and other variations and adaptations can readily be selected and implemented by the skilled artisan.

Other features that can be included in a channel device for use herein can be found, for example, in the following references Ajdari, A., and J. Prost. Free-flow electrophoresis with trapping by a transverse inhomogeneous field, Proc. Natl. Acad. Sci. USA. 88:4468-4471, (1991); Asbury et al., Manipulation of DNA using non-uniform oscillating electric fields, Biophys. J., 74:1024-1030 (1998); Austin et al., U.S. Pat. No. 6,203,683 (2001); Austin et al., WO 98/08931 (1998); Backhouse et al., DNA sequencing in a monolithic microchannel device, Electrophoresis, 21, 150-156, (2000); Becker et al., Polymer microfabrication methods for micro fluidic analytical applications, Electrophoresis, 21, 12-26, (2000); Bryning et al., U.S. Patent Application Serial No. 09/522,638 filed March 10, 2000, entitled, "Methods and apparatus for the location and concentration of polar analytes using an alternating electric field" (US-A-2006081474); Crippen, M.R. Holl, D.R. Meldum, Dept. of Electrical Engineering, Univ. of Washington, Seattle, Washington, Examination of dielectrophoretic behavior of DNA as a function of frequency from 30Hz to 1MHz using a flexible microfluidic test apparatus, Proceedings of the uTAS 2000 Symposium, held in Enshede, The Netherlands, 14-18 May 2000; Dolník et al., Capillary electrophoresis on microchip, Electrophoresis. 21, 41-54, (2000); Garcia-Campana et al., Miniaturization of capillary electrophoresis systems using micromachining techniques, J. Microcolumn Separations. 10(4) 339-355 (1998); Grossman and Colburn, Capillary Electrophoresis Theory and Practice, Chapter 1, Academic Press (1992); Madabhushi et al., U.S. Pat. No. 5,552,028 (1996); Madou, Fundamentals of Microfabrication, CRC Press, Boca Raton, FL (1997); McDonald et al., Fabrication of microfluidic systems in poly(dimethylsiloxane), Electrophoresis, 21, 27-40, (2000); Sambrook et al., eds., Molecular Cloning: A Laboratory Manual, Second Edition, Chapter 5, Cold Spring Harbor Laboratory Press (1989); Simpson et al., A transmission imaging spectrograph and microfabricated channel system for DNA analysis, Capillary electrophoresis on microchip, Electrophoresis 21, 135-149, (2000); Washizu, M., and O. Kurosawa, Electrostatic manipulation ofDNA in microfabricated structures, IEEE Trans. Ind. Appl. 26:1165-1172, (1990); Washizu, M., S. Suzuki, O. Kurosawa, T. Nishizaka, and T. Shinohara, Molecular dielectrophoresis of biopolymers, IEEE Trans. Ind. Appl. 30:835-843, (1994); Washizu, M., O. Kurosawa, I. Arai, S. Suzuki, and N. Shimamoto, Applications of electrostatic stretch-and-positioning of DNA, IEEE Trans. Ind. Appl. 31:447-456, (1995); and Woolley et al., Ultra-high-speed DNA fragment separations using microfabricated capillary array electrophoresis chips, Proc. Natl. Acad. Sci., Biophysics, vol. 91, pp. 11348-11352, Nov. 1994.

In practice, a separation medium can be injected (e.g., pressure-filled or vacuum aspirated) or otherwise provided in the channels of the device. Exemplary separation mediums include but are not limited to agarose and crosslinked polyacrylamide. In various embodiments, each channel is filled in its entirety with a separation medium, such as GeneScan Polymer (P/N 401885) or POP-6 (P/N 402844) from Applied Biosystems (Foster City, CA). While various embodiments of the present invention call for the use of a separation medium, it is noted that other embodiments do not contemplate or require the use of a separation medium. In various embodiments, for example, the channels of the device are filled only with a buffer solution (TAPS with sodium as a cation), without any separation medium.

In various embodiments, wherein a separation medium is employed, a sample containing a polarizable analyte and one or more contaminants is placed in one of reservoirs, 34, 36, 38, 40; and buffer solution is placed in one or more of the other reservoirs. Loading can be effected in any suitable manner, e.g., by way of a manual or automated pipette assembly.

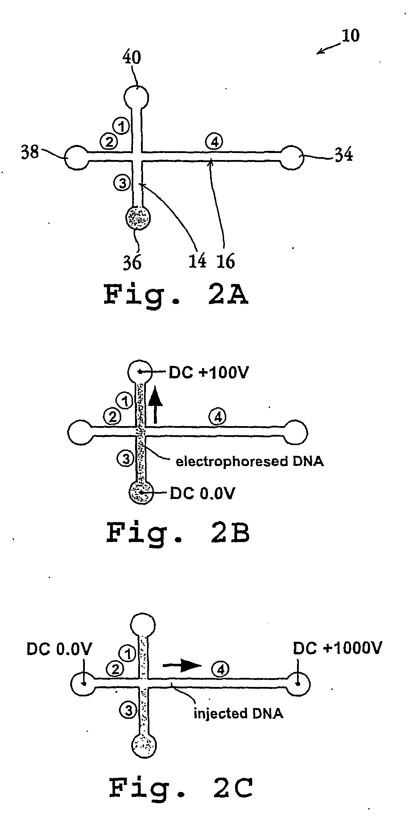

A sample can be manipulated in any of a variety of ways. For example, Figures 2A - 2C schematically depict a channel device 10 having separation medium filling cross channels 14, 16. A sample solution, depicted by shading, can be placed in reservoir 36 (see Figure 2A), and buffer solution can be placed in the other reservoirs, 34, 38, 40. A loading voltage can then be applied, e.g., 100V DC, between reservoirs 36, 40 to pull the sample into arms 1, 3 (see Figure 2B), as also depicted by shading. The loading voltage can then be discontinued and a separation voltage applied, e.g., 1000V DC, between reservoirs 38, 34; thereby pulling a volume of the sample, depicted in shading as a plug, into main arm 4 for separation (see Figure 2C). Note that the volume of the sample pulled into the main channel is generally defined by the intersection volume of the intersecting channels. One or more analyte zones can then be detected and/or recovered at a region down the main channel. While useful for many purposes, the just-described method does not provide for concentration/purification of any analyte(s) in the sample prior to separation. Notably, the just-described method does not include the use of an AC field along with the DC field, much less field gradients formed by superposition of an AC field over a DC field.

Various embodiments of the present invention make use of field gradients to concentrate and purify analytes in samples, including gradients formed by application of both DC and AC fields simultaneously along one or more channels of a channel device. Essentially any analyte that can be polarized in an electric field, e.g., molecules or suspended particles, can be manipulated using generated field gradients. The inventors hereof have found that polarizable analytes can be attracted to regions of high field gradients, such as those generated near electrode edges and/or at corners of microfluidic channels. Further, in some cases, polarizable analytes can be repelled from regions of high field gradient. Attraction to and/or repulsion from regions of high field gradients are exploitable as a means of concentrating polarizable particles from a bulk solution.

Applied fields useful to attract or repulse a polarizable analyte can be generated as either a constant (direct current, or DC) or oscillating (alternating current, or AC) potential. The only restriction is that the field be divergent at one or more points or regions in order to form field gradients to attract or repulse the analytes. Attraction or repulsion can occur with either neutral or charged analytes. Without committing to any particular theory, it is thought that in the case of a charged species, a DC field will also cause a strong electrophoretic attraction or repulsion which can overwhelm the force from the polarization-induced force. The use of an AC field to generate the high field gradient causes the electrophoretic forces to be equal and opposite and thus cancel. Therefore, while the concentration of charged analytes can be achieved with either an AC or DC field, the use of an AC field causes the polarization-induced forces to predominate and can enhance the selectivity of the concentration based on polarizability.

Using attractive and/or repulsive concentration, a polarizable analyte can be concentrated relative to a bulk solution. Additionally, by selecting appropriate electric field parameters, a polarizable analyte can be purified relative to other species in a bulk solution that are less polarizable under the applied electric field. These less-polarizable analytes will feel a significantly smaller attraction or repulsion due to the applied field and will not be concentrated along with the more polarizable analyte. This difference in selectivity for species based on attraction or repulsion to high field gradients forms the basis for concentration and purification of one or more species from a complex mixture.

### Generation of high electric field gradients

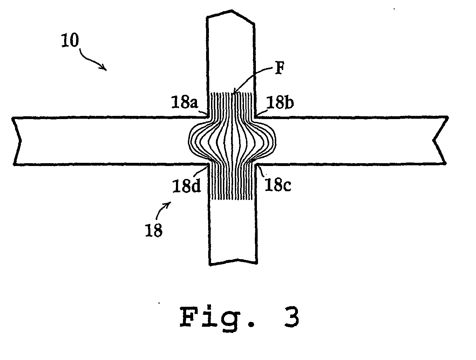

Generation of a suitable field gradient can be accomplished in a variety of ways. For example, metal electrodes of various shapes can generate high field gradients near their edges. Alternatively, or in addition, high field gradients can be created by introducing irregularities or uneven wall profiles, e.g., corners, turns, edges, ridges, bumps, islands, undulating surfaces, constrictions, and the like, in the path of the electric field that will serve to concentrate the field. For example, in a microfabricated channel, high field gradients can be generated at edges where the field encounters (e.g., is forced to turn) a corner. In the examples below, more fully described below, the geometry of an intersection region whereat two channels cross in a microfabricated device is exploited to generate electric field gradients. Figure 3, for example, shows field concentration proximate four corners (18a, 18b, 18c, 18d) of a channel intersection 18 of a microfabricated channel device 10. The sharp edges (comers) at the channel intersection cause field lines, denoted as F, to be divergent at these regions. This results in a high field gradient at each of the four corners, 18a, 18b, 18c, 18d. The electrodes (not shown in Figure 3) used to generate the field gradient in this embodiment are disposed symmetrically upstream of arms 1 and 3. Each electrode is disposed in a respective reservoir (not shown in Figure 3) communicating with one of arms 1, 3, so as to avoid interaction of the electrodes with the bulk solution. Alternate field gradient geometry can be attained by placing the field generating electrodes in other arms of the device, such as described below.

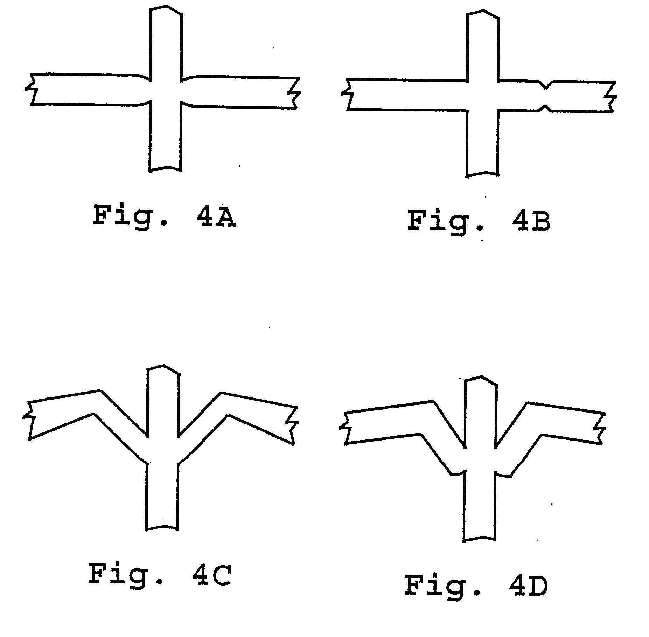

As will become apparent, a variety of geometries can be used to generate, tailor and even enhance (e.g., strengthen) the concentration of a field gradient. Four exemplary configurations are shown in Figures 4a - 4d. Figures 4a and 4b demonstrate one or more constrictions (i.e., narrowed-width regions) of channels of a channel device. Figures 4c and 4d additionally depict the utilization of sharp corners to enhance the field gradients that are generated when an electric field is applied. Sharp corners can comprise, for example, any turn along which electric fields lines are caused to pass (along the direction of electron flow) that is at least 40 degrees; e.g., 45, 70, 90, 120, 145 degrees, or greater. Following the teachings herein, one of skill in the art can devise a variety of geometries effective to enhance the field gradient at desired points within a channel. For example, one can narrow the width of the sidearms as they approach the "T" intersection of a microfabricated channel device.

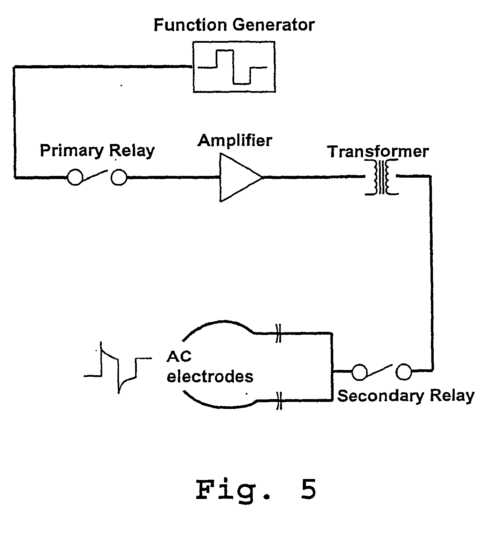

The AC field can be generated and applied in a variety of ways. In one embodiment, an AC field is generated by a function generator connected to an amplifier, and electrically isolated from a DC circuit by a transformer. Residual current leakage through the AC circuitry can further be reduced by capacitors in the circuit. A schematic of a suitable AC circuit is shown in Figure 5.

### Purification of Polynucleotides

An embodiment of the present invention makes use of a cross-channel or T-format geometry to generate electric field gradients capable of concentrating and purifying DNA away from potentially interfering species in a bulk solution. Sharp edges (comers) at the intersection of the cross channels (the "T") causes the field lines to be highly divergent in the cross-channel region. An applied AC field, in combination with a DC field (an electrophoretic field), results in DNA concentration into a very small volume within the microfabricated device. Once concentrated into a small volume and purified away from potential interferences in the bulk solution, the DNA can optionally be moved into a separation channel or collection reservoir for analysis and/or recovery.

One advantage of the present invention is that the DNA fragment(s) of interest can be concentrated and purified away from interfering species and injected into an analyzer without any user manipulation. In certain of the embodiments herein, DNA concentration and purification is integral with a separation device and, thus, requires no transfer of samples from the purification device to the analyzer. Several such embodiments will now be described in the context of the Examples described below. While these examples are described in the context of microfabricated channel devices, it is to be understood that the invention can be practiced in other formats.

### Example 1:

A first example of the present invention is depicted schematically in Figures 6, 7, and 8. The channel geometry and dimensions are as described above with respect to Figure 1. Arms 1, 2, 3, and 4 were filled in their entirety with separation medium (GeneScan Polymer from Applied Biosystems (Foster City, CA)). A DNA-containing sample was loaded into reservoir 38, and buffer solution (TAPS) was placed in reservoirs 34, 36, and 40. Under the influence of a DC potential, the DNA-containing sample was electrophoresed to introduce it into the device. Particularly, a potential of 100V DC was applied between reservoirs 38 and 34, thereby electrophoretically pulling the DNA-containing sample into arms 2 and 4, as depicted by shading. It is noted that, until this point, arms 1 and 3 remained substantially free of DNA-containing sample.

An AC field was then applied across arms 1 and 3. The AC field can be any suitable combination of waveform, field strength, and frequency, but in this example the AC field was a square wave at 10kHz with a voltage of 2000V peak to peak. A DC field was simultaneously applied along arms 2 and 4. Appreciating that any suitable DC voltage can be employed; in this example, the applied DC voltage was 1000V.

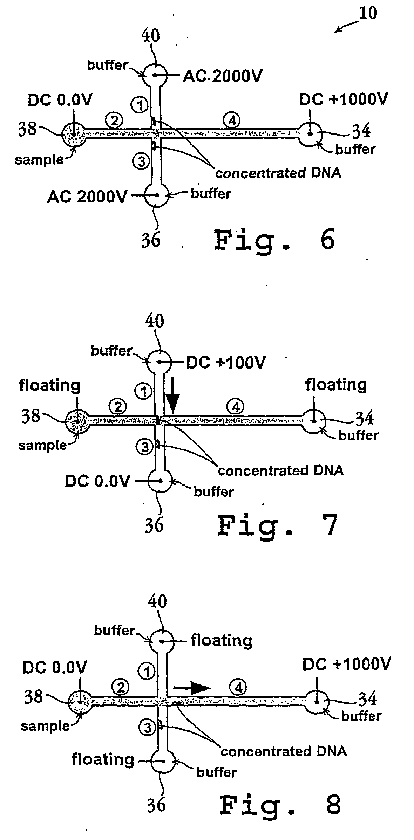

Under these conditions, the DNA was concentrated into small bands at localized regions in arms 1 and 3 (see Figure 6; blackened regions represent concentrated DNA). Once concentrated, the DNA was caused to move into the center of the channel (namely, the cross-channel junction) by turning off the AC, and applying a small DC voltage (100V DC) across arms 1 and 3 (see Figure 7). Finally, the DNA was introduced into main arm 4 by applying a DC voltage (1000V DC) down the length of arm 2 and main arm 4 (see Figure 8). Once in the channel, the DNA was separated. The separated DNA could then be detected (e.g., using a LIF detection arrangement disposed to observe a downstream region along the separation arm) and/or recovered.

### Example 2:

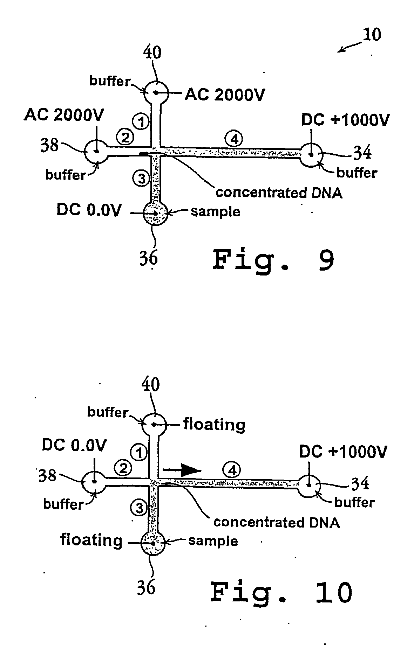

A second example of the present invention is depicted schematically in Figures 9 and 10. The channel geometry and dimensions are as described above. Arms 1, 2, 3, and 4 were filled in their entirety with separation medium. A DNA-containing sample was loaded into reservoir 36, and buffer solution was placed in reservoirs 34, 38, and 40. Under the influence of a DC potential, the DNA-containing sample was electrophoresed to introduce it into the device. Particularly, a potential of 100V DC was applied between reservoirs 34 and 36, thereby electrophoretically pulling the DNA-containing sample into arm 3, and down long arm 4 (as depicted by shading). It is noted that, until this point, arms 1 and 2 remained substantially free of DNA-containing sample.

An AC field was then applied across side arms 1 and 2. The AC field was a square wave at 10kHz with a voltage of 2000V peak to peak. A DC field was simultaneously applied across arms 3 and 4. The applied DC voltage was 1000V.

Under these conditions, the DNA was concentrated into a small band in arm 2 near the intersection of the T (see Figure 9). Once concentrated, the DNA was then introduced into separation arm 4 by applying a DC voltage down the length of arms 2 and 4 (see Figure 10). A small DC pinching voltage can be useful in introducing the sample plug into the separation arm. In this example, such a voltage was generated by tying the electrodes at the ends of arms 1 and 3 to the electrode at the end of arm 2 through 100 MOhm resistors. This pinch was applied after the AC concentration was complete and the AC voltage was removed. However, it is noted that the technique can be effective even in the absence of such a pinching voltage. Once in the channel, the DNA can be separated, detected and/or recovered.

### Example 3:

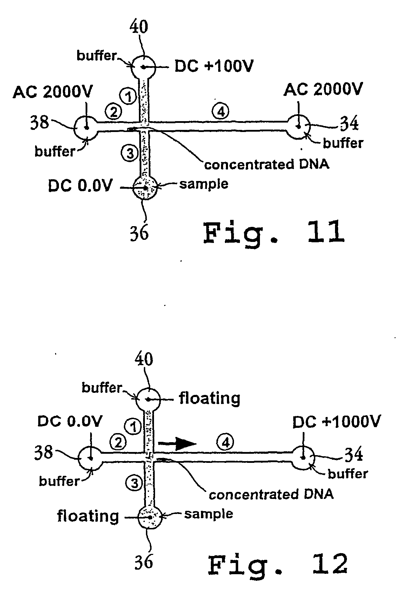

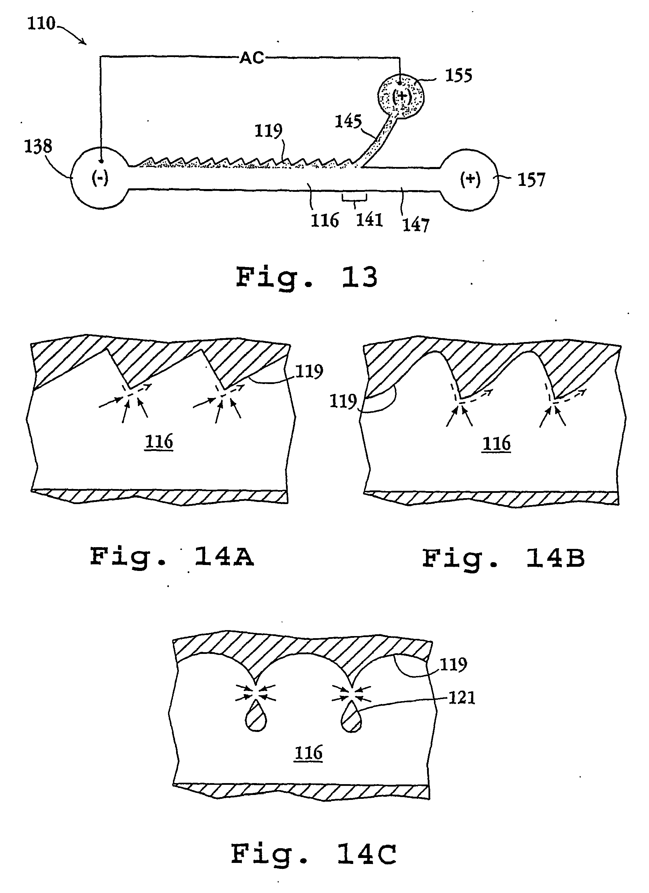

A third example of the present invention is depicted schematically in Figures 11 and 12. The channel geometry and dimensions are as described above. Arms 1, 2, 3, and 4 were filled in their entirety with separation medium. A DNA-containing sample was loaded into reservoir 36, and buffer solution was placed in reservoirs 34, 38, and 40. Under the influence of a DC potential, the DNA-containing sample was electrophoresed to introduce it into the device. Particularly, a potential of 100V DC was applied between reservoirs 36 and 40, thereby electrophoretically pulling the DNA-containing sample into arms 1 and 3 (as depicted by shading). It is noted that, until this point, arms 2 and 4 remained substantially free of DNA-containing sample.

An AC field was then applied across arm 2 and long arm 4. The AC field was a square wave at 10kHz with a voltage of 2000V peak to peak. A DC field was simultaneously applied across arms 3 and 1. The applied DC voltage was 100V.

Under these conditions, the DNA-containing sample was concentrated into a small band in arm 2 near the intersection of the T (see Figure 11). Once concentrated, the DNA was introduced into the separation arm by removing the AC source and applying a DC voltage (1000V DC) down the length of arms 2 and 4 (see Figure 12). A small DC pinching voltage can be useful in introducing the sample plug into the long arm. In this example, such a voltage was generated by tying the electrodes at the ends of arms 1 and 3 to the electrode at the end of arm 2 through 100 MOhm resistors. This pinch was applied after the AC concentration was complete and the AC voltage was removed. However, it should be noted that the technique can effective even in the absence of such a pinching voltage. Once in the channel, the DNA can be separated, detected and/or recovered. This embodiment can be advantageous because it injects the purified DNA into a channel that is free of dye-labeled DNA and therefore lower noise at the detection point can be realized.

### Example 4:

In a fourth example of the present invention, a polarizable analyte is concentrated in a fashion like that described in the previous examples; however, it is not separated in a channel that is integral to the device (e.g., long arm 4). Rather, a small access opening in the top of the device adjacent a known region whereat a target analyte will predictably concentrate is constructed to be sealed during the concentration process, and then to be opened to allow access to the concentrated analyte; e.g., for interfacing with an external analyzer. For example, a capillary can be used to remove concentrated analyte directly from the channel device. One end of the capillary can be passed through the opening for positioning adjacent the concentrated slug of analyte. The analyte can then be injected into the capillary. For example, an electrophoretic force can pull the concentrated analyte into the capillary. In various embodiments, a cathodic electrode is used for injection into the separation capillary, with the electrode being either integral to the concentration device or a part of the capillary sampler.

This embodiment can find use, for example, in the purification and concentration of a DNA-containing sample prior to capillary electrophoretic analysis. Such device can be used to inject a concentrated plug of DNA into a capillary, free from salts and dye terminators that are in the bulk solution.

As previously indicated, various embodiments of the present invention contemplate concentration/purification of an analyte (e.g., DNA) at a location away from a separation device or other analytical device.

Various embodiments of a channel device, as contemplated herein, are depicted in Figure 13. The device can be formed employing any of the materials and fabrication techniques previously described. In an embodiment, the channel device comprises a chip- or plate-like device having one or more grooves etched or otherwise formed in an insulating material such as plastic, glass, oxidized silicon, or the like.

The device, denoted as 110, includes an elongate channel 116, having a loading reservoir 138 at one end, and a mouth region of a Y-type intersection 141 at its other end. Y-intersection 141 diverges into two segments or arms, denoted as 145 and 147, each having a terminal end disposed for communication with a respective reservoir, 155 and 157. The inlet region leading into arm 145 is configured to have a smaller flow cross-sectional area (i.e., a cross-sectional area taken normal to the direction of sample migration) than that of the inlet region leading into arm 147. For example, the flow cross-sectional area of the inlet region of arm 145 can be 20-50% that of the inlet region of arm 147.

In various embodiments, reservoir 138 acts as a loading well for receiving a fluidic sample, reservoir 155 acts as a concentrated-sample collection well, whereat purified sample can accumulate, and reservoir 157 acts as a waste collection well, whereat potential interferences can accumlate. In one embodiment, channel 116 is 5cm in length, and each of segments 145, 147 are 2cm in length. Each of reservoirs 138, 155, 157 is adapted to communicate with a respective electrode (not shown) which, in turn, is disposed for electrical communication with one or more electrical potential generators (e.g., AC and DC energy sources).

One side of channel 116, denoted as 119, includes wall structure defining a side wall or boundary, with the wall structure including surface features configured to contribute to formation of field gradients along the wall when an AC field is applied. In the embodiment of Figure 13, side wall 119 is provided with a saw-toothed, or serrated, profile. Other uneven profiles can be employed, as discussed below. Upon application of an AC field along the channel, a high field gradient will form adjacent each tooth, as depicted in Figure 14A. Such field gradients have a field strength effective to attract polarizable analytes, such as DNA.

It should be appreciated that the surface features are not limited to placement along one side wall; but rather they can be placed along top, bottom, or side walls, or any combination thereof.

In an exemplary use of device 110, a DNA-containing sample is loaded into reservoir 138 and caused to enter into and migrate down channel 116 towards Y-intersection 141 via application of an electrophoretic (DC) field. At the same time the DC field is applied, or shortly thereafter (before the sample has migrated substantially down the channel) an AC field is applied on top of the DC field. The surface features of side wall 119 cause the net electric field to diverge at locations proximate thereto, so that polarizable components of the sample, such as DNA, are attracted to a marginal region alongside side wall 119. Thus, as the sample is pulled into the channel and caused to migrate down the channel by the electrophoretic force (DC field), the DNA component of the sample, in addition to migrating down the channel, is caused to concentrate along side wall 119. Upon reaching Y-intersection 141, the concentrated DNA, primarily enters arm 145 since it is disposed along the same side of channel 116 as such arm, while other components of the sample, which are not attracted to side wall 119, continue in their trajectory to enter arm 147 toward reservoir 157. As a consequence of entering the different arms, the bulk of the DNA component of the sample finally reaches reservoir 155, and the components entering arm 147 reach reservoir 157. Thus, in large part, the polarizable DNA is shunted off to one reservoir, while much of the rest (non-polarizable components) go to the other reservoir.

The side wall profile can have any shape that acts to partition the sample. Some examples are shown in Figures 14A, 14B, and 14C. Figure 14A illustrates a "saw-toothed," or serrated, profile. Upon application of AC and DC fields, a high field gradient is formed adjacent a point or tip region of each tooth (denoted by darkened arrows). Streak lines resulting from the DC field can be seen (broken arrows) extending downstream in the marginal region alongside side wall 119. Figure 14B illustrates a "wave" profile. A high field gradient is established at the crest (tip) of each wave. The region between adjacent waves (i.e., trough regions) provide low field collection zones. Figure 14C illustrates "pinching islands," wherein generally tear-shaped islands 121 are formed at spaced-apart positions along channel 116 adjacent sidewall 119. The profile of wall 119 alongside islands 121 is rippled, with a crest or tip of each ripple disposed adjacent a pointed region of a respective adjacent island 121.

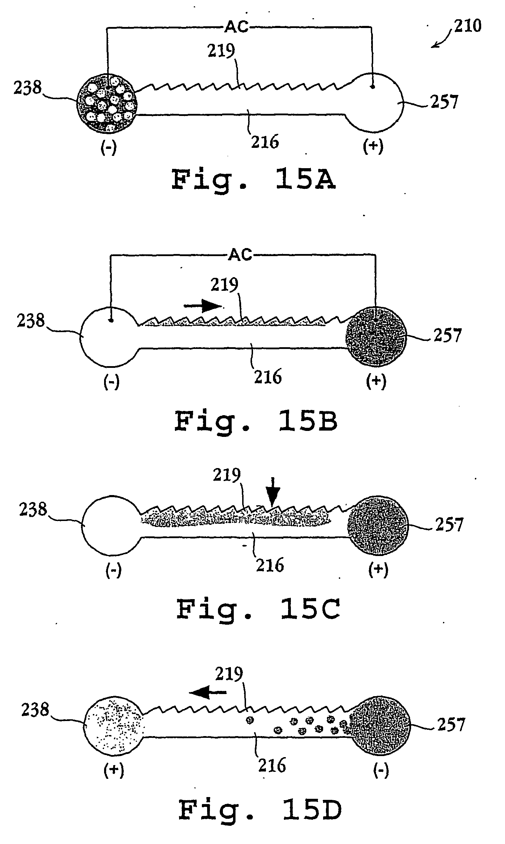

Another embodiment exploits differential retardation rates between various components of a sample migrating along a channel which has high field strength gradients formed at positions along its length. For example, Figure 15 illustrates a channel device 210 having a channel 216 with a saw-toothed profile along one side wall 219. A first reservoir 238, which can act as a loading/collection well, communicates with one end of channel 216 and a second reservoir 257, which can act as a waste well, communicates with the other end.

In one use of the device of Figures 15A-15D, a DNA-containing sample is loaded into reservoir 238 and electrophoresed down channel 216. Initially both AC and DC potentials are applied (see Figure 15A). The interaction of the net field with the surface features of side wall 219 (i.e., the formation of field gradients in the vicinity of such features) causes polarizable analytes, such as DNA, to be attracted to a marginal region alongside side wall 219, while non-polarizable components of the sample migrate, substantially unimpeded by the field gradients, to reservoir 257 (see Figure 15B). Thus, the DNA is partitioned from the waste components since migration of the DNA down the channel is retarded as compared to non-polarizable components of the sample, which are not attracted to side wall 219. Before the DNA is able to reach reservoir 257 (or at least before any substantial portion of the DNA content of the sample can reach such reservoir), the AC field is discontinued, so that the DNA is no longer attracted to side wall 219. The DNA can then diffuse away from side wall 219, out into channel 216 (see Figure 15C). At this point, the DC field is reversed, so that the sample components are pulled back towards reservoir 238. In a journey back to reservoir 238, the DNA, still largely in the channel, has a spatial lead on the sample waste, which is largely located at this point in reservoir 257. Once the DNA has returned to reservoir 238, and before any significant amount of waste reaches it, the DNA, now concentrated, can be collected (see Figure 15D). The DC field can be turned off to avoid pulling waste components into the reservoir holding the concentrated DNA. The separation can be repeated one or more times, as needed, to get a desired level of purification.

Because the partitioning is in time, either one or both sides of the channel may have uneven profiles. Thus, another embodiment contemplates a device like 210 of Figure 15, but having uneven edge profiles along both lateral sides.

Various related embodiments provide multiple loading/recovery reservoirs (like 238) that merge into a channel (like 216) with an uneven edge profile (like 219) that terminates at a single waste well (like 257).

In order to recover a higher concentration of DNA in the loading/collection reservoir it can be useful to make the volume at the end of the process (i.e., target analyte collection in the loading/collection well) smaller. This can be accomplished by many methods. For example, liquid can be removed from the loading reservoir while the sample, including the target DNA, is in the channel. Or, the liquid in the loading reservoir can be made to evaporate (e.g., by heating), or it can be made to flow towards the waste well.

The various embodiments of the present invention are not limited to DNA applications. For example, they can be applied to concentrating cells or other complex samples.

The above description has assumed that only polarizable components of a sample are desired targets. However, the invention is not so limited. It is contemplated that, in certain applications, the non-polarizable components of a sample may contain target analyte(s), and thus the present invention provides for the concentration/purification of these, as well.

It should be appreciated that a driving force other than an electrophoretic force can be used to cause the various sample components to move through a channel. For example, pressure gradients (as opposed to a DC field) can be used to cause sample components to move along a channel.

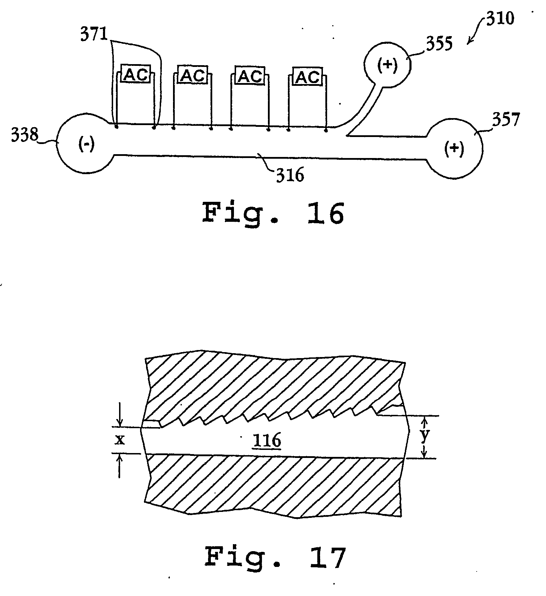

In various embodiments of the present invention, electrodes are incorporated into a wall structure bounding a channel of a channel device, with the electrodes being disposed for electrical communication with a power source operable to supply an alternating current. As shown in Figure 16, for example, a microfabricated channel device 310 includes electrodes 371 positioned at spaced-apart locations along a channel 316, with adjacent pairs of the electrodes being adapted to create respective AC field gradients within the channel. In this particular embodiment, the electrodes are embedded in wall structure along one side (only) of the channel. In addition, a DC field can be applied between a first reservoir 338 disposed for communication with one end of channel 316 and second and third reservoirs, 355, 357, located at the other end of the channel.

Although the above embodiments describe field-gradient-inducing surface features disposed on side walls of a channel, the present invention contemplates surface features, such as those described in the above embodiments, along other boundary or wall surfaces (such as the bottom (floor) wall or top (ceiling) wall), such features being configured to create field gradients.

In various embodiments, such as depicted in Figure 17, the width of a separation channel, having a serrated profile along one side, varies (increases or decreases) along the channel's length. Flow of sample is from left to right, in Figure 17. In the illustrated arrangement, the distance "x" is less than the distance "y." By increasing the gap, one can increase the physical separation or decrease the field gradient. In some applications, it may be useful modify what is shown in Figure 17 so that "x" is greater than or equal to "y."

The devices described and claimed herein can be single use (disposable) or can be designed to be use multiple times, with proper cleaning between uses.

The above embodiments can be adapted for dense or parallel applications, such as using 96 well microtiter plate formats. For example, a plurality of capillary tubes of a capillary electrophoresis apparatus can be disposed with their inlet ends defining a common plane and arranged as an 8X12 regular rectangle array spaced 0.9 cm center-to-center. 96 channel devices can be provided in a plate format with collection regions (e.g., wells) arranged to correspond to the capillary tube inlet ends (i.e., as an 8X12 regular rectangle array spaced 0.9 cm center-to-center), thereby permitting the entire array of inlet ends to simultaneously address respective collection wells for loading of concentrated/purified samples. Of course, any matching spatial arrangement of collection regions and inlet ends can be used (e.g., a planar array, etc.).

According to various embodiments of the present invention, the devices can be provided with channels that have channel geometries designed to concentrate DNA, for example, devices with a restriction in the channel. These devices are referred to as pinch channel devices and are described in detail below. Also described below is new data in the characterization of an exemplary electrical system that can be used to generate AC fields on the pinch device breadboard and also show endpoint data of DNA concentrated using the pinch device and a related electrical system.

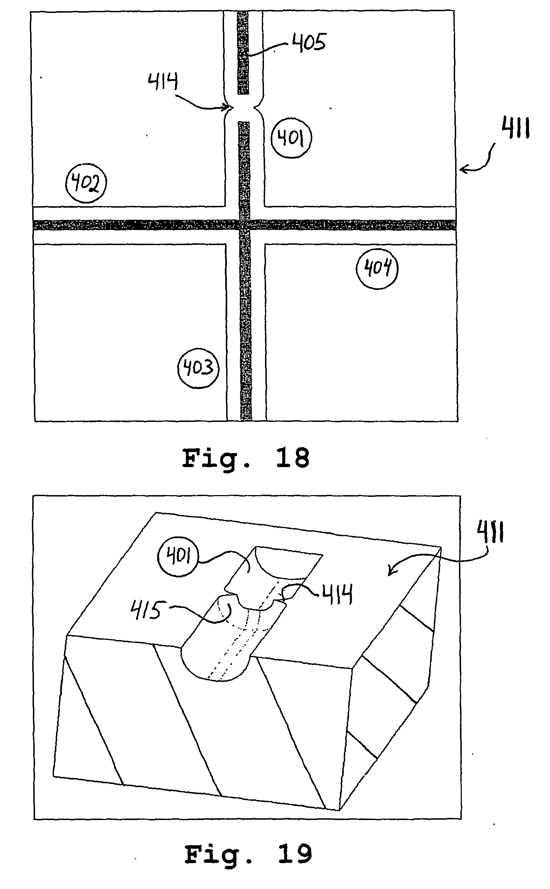

Pinched channel devices according to various embodiments of the present invention can be fabricated by preparing a mask that has a discontinuity in the channel. This discontinuity can be dimensioned such that during the etch phase of fabrication the two sides of the discontinuity would break through and form a pinch in the channel. Fig. 18 is an overhead view of a mask 405 for a pinch channel device 411 according to various embodiments of the present invention. The device 411 includes three side arms 401, 402, and 403, and a separation arm or main arm 404, and a pinch 414 shown in side arm 401 of the pinch channel device. The device also includes reservoirs or inlets 406, 408, 410, and 412. The shape of the resulting restriction is shown in perspective view in Fig. 19. As shown in Fig. 19, the pinch point 414 is at least partially defined by an annular ridge 415 resulting from a masking and etching operation. The device can have, for example, a channel geometry of about 120 µm wide by about 50 µm deep, or about 72 µm wide by about 30 µm deep in the main channel depending on the etch depth. The cross-sectional area of the opening in the pinch can be from about one-tenth to about one-half the cross-sectional area of the opening, for example, about one-fifth that of the main channel.

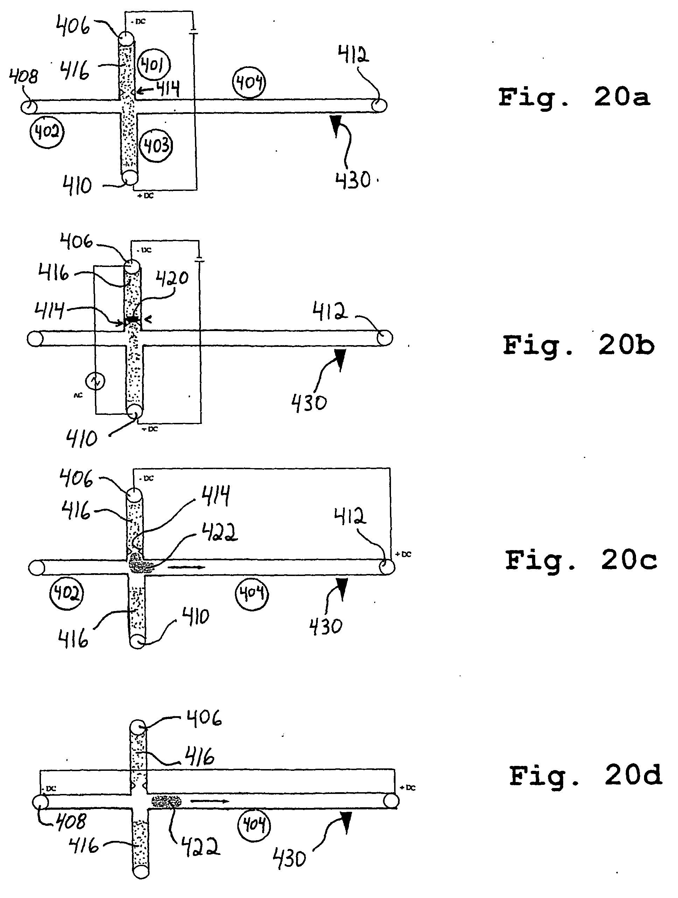

Most of the further experiments described below were performed using a device that had a pinch in a side arm of the separation channel. Figs. 20a-20d illustrate a method and sample processed using the method, according to various embodiments of the present invention wherein the device has a pinch in a side arm of the channel.

The general procedure for a concentration method was as follows. The short arms of the channel were filled with sample using electrophoresis, as shown in Fig. 20a. The DC field was then reduced to a much lower bias voltage setting, described in greater detail below, and the AC field was turned on. DNA accumulated at the pinch in the channel, as illustrated in Fig. 20b, to form a concentration band 420 at pinch 414. After concentration for about two to about 10 minutes, the AC field was removed and the concentrated band of DNA 420 was moved into the separation arm 404 of the device using DC electrophoresis, as shown at band 422 in Fig. 20c. Once the concentrated band 422 was in the separation arm 404, the DC electrodes were moved to points 412 and 408 and electrophoresis began, as shown in Fig. 20d. The released DNA 422 was detected by a detector 430 at an endpoint adjacent channel end point 412.

As shown in Figs. 20a-20d, the DNA is trapped on one side of the pinch in the channel and in some cases seems to hold with very little leakage through the pinch. According to various embodiments of the present invention, very effective DNA trapping can be achieved with the pinch geometry.

A small DC bias voltage can be applied to the device in addition to the AC trapping field. These two fields will be referred to as the trapping voltage (AC), and the bias voltage (DC). If only the trapping voltage is applied to a channel filled with polymer and dye-labeled DNA, a small band of concentrate forms on one side of the trap, but slowly moves away from the trap point. Effective concentration may not occur under these conditions. While not wanting to be bound by theory, it is believed that there are three possible explanations for what is happening. First, the trapping field may not be completely symmetrical and therefore there may be a small DC offset built in to the AC. This offset voltage may be sufficiently strong to overwhelm the trapping force and thus pull the nascent band away from the trap. A second possibility is that the AC waveform is asymmetric, but that there is no DC offset. There are known to be non-linear electrophoretic effects that that can cause net migration of DNA in an asymmetric oscillating field even when the net field is zero. This effect arises because of non-linear voltage dependent electrophoretic mobility in polymer. This, however, is only an electrophoretic effect and is distinct from dielectrophoresis which is caused by induced polarization of the molecule. Experimentally, an effect from non-linear electrophoretic mobility would be difficult to differentiate from a DC offset; both would appear as though a small DC field was applied to the channel. A third possibility for why the nascent band moves away from the pinch is that it is being repelled. It is known that dielectrophoresis can be attractive or repulsive, and it is believed that the observed effect could be caused by either repulsive or attractive dielectrophoresis.

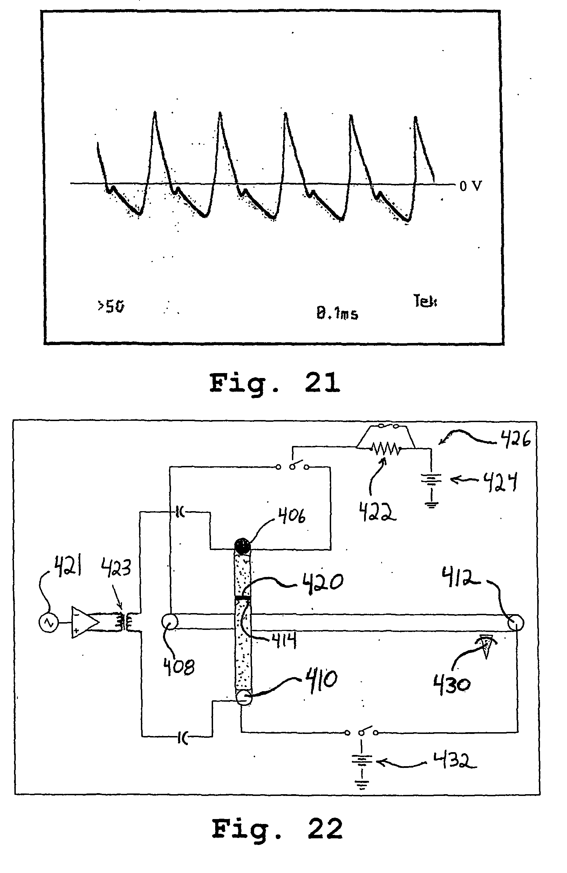

Aforementioned embodiments of the present invention have used sine waveforms as well as square waveforms with equal success. The pinch channel devices, however, are even more effective when particular waveforms and frequencies are used. Fig. 21 shows an AC waveform that works well with various embodiments of the present invention having a pinch channel. The sawtooth waveform of Fig. 21 has a frequency of 5kHz and a peak-to-peak voltage of 1650 V.

The sawtooth waveform shown in Fig. 21 is assymetric although it is possible that the areas of the waveform above and below the zero point are equal. If that is the case, the net DC component can also be equal to zero. Upgrades to the system breadboard electrical system are discussed below and can aid in understanding waveform effects of the pinch channel devices of various embodiments of the present invention.

Regardless of the mechanism of concentration, a bias voltage can be used to cause DNA concentration at the pinch. The bias can be applied by using a second set of electrodes attached to a DC power supply. The electrodes can be placed in buffer reservoirs of a pinch channel device along with the AC electrodes. The DC power supplies on the system breadboard can be designed to operate in the kilovolt range and therefore a 1.0 gigaohm resistor can be placed in series with the DC power supply to allow a small DC bias to be applied. Fig. 22 shows a detailed schematic of an electrical system of a sidearm pinch channel device according to various embodiments of the present invention. As shown in Fig. 22, the system includes an AC power supply 421 having a voltage of 1650 VAC peak-to-peak, and a sawtooth waveform at 5kHz, a transformer 423, the 1 Gohm resistor 422, a DC power supply 424 of -0.1kV that supplies a DC voltage of - 105V at point 426 shown in Fig. 22, and a DC power supply 432 of 0.0V. Between the AC power supply 421 and the transformer 423 is a 10x amplifier.

By manipulating the DC bias voltage, the concentrated band of DNA can be induced to move into the trap and accumulate. The optimum bias voltage can be found by trial and error. For example, the bias voltage can be increased until the trap begins to leak, then backed off until the concentrating band becomes stable. The degree to which concentration occurs can be roughly estimated by measuring the intensity of the imaged area on a CCD. In most cases, the brightness of the band begins to plateau after about five to seven minutes.

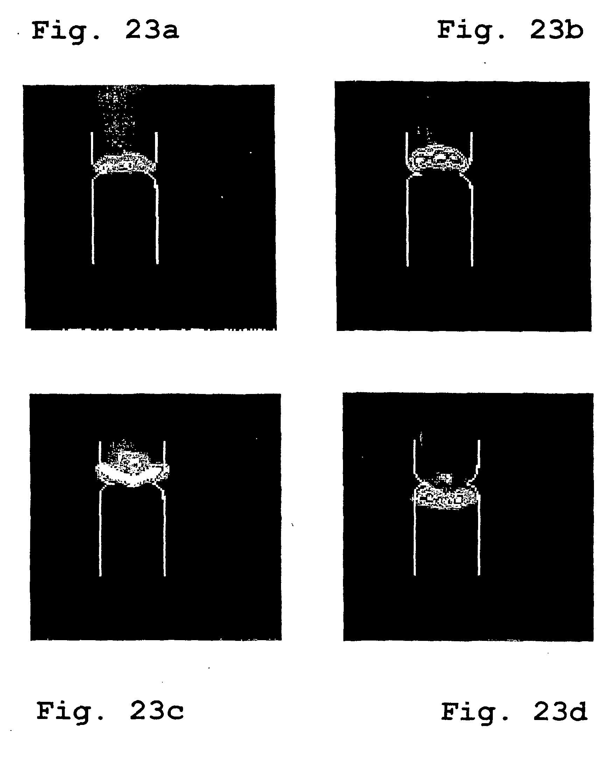

Figs. 23a-23d are CCD images of a trap and release according to various embodiments of the present invention. Figs. 23a-23d show that the DNA concentrates in a relatively small band, in this case approximately 30 microns thick, and that the concentration occurs on the upstream side of the trap. Figs. 23a-23c show the sample concentration on the upstream side of the trap at one (1) minute, three (3) minutes, and six (6) minutes, respectively. The relative signal strengths at one (1) minute, three (3) minutes, and six (6) minutes are 850, 11,500, and 44,000, respectively. Upstream in this case is defined as the side of the trap from with the sample is electrophoresed. The DNA can concentrate on one side of the pinch and can avoid being concentrated in the middle. The side of the pinch on which concentration is determined can be determined by the orientation of the AC electrodes. In cases where the DNA always concentrates on one particular side of the AC electrode, it is believed, without wishing to be bound by theory, that the mechanism of concentration is related to the asymmetric waveform. Fig. 23d shows the sample having passed through the trap after the AC voltage has been removed.

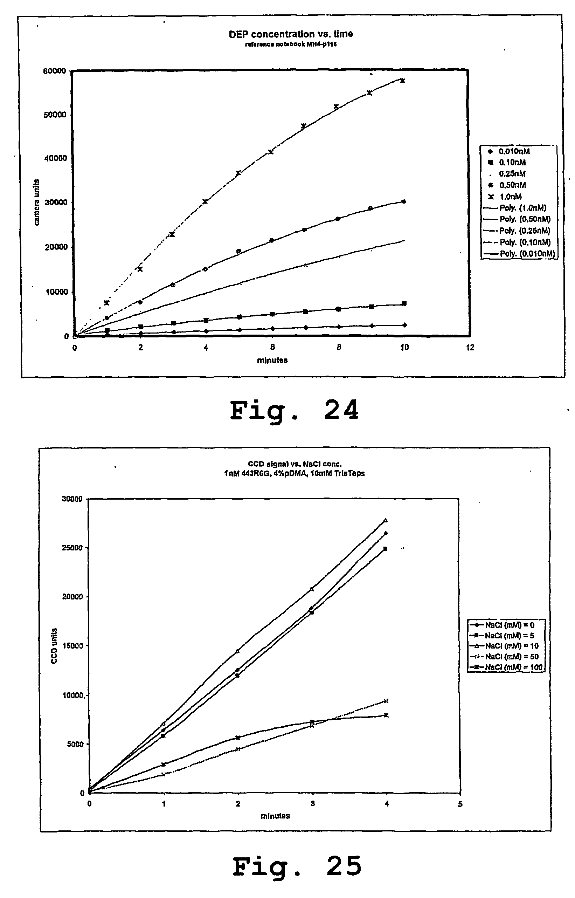

Fig. 24 is a graph of the brightness of the signal of the concentrated band versus time for a series of dilutions of an R6G-labeled 443nt dsDNA fragment. These data were collected by imaging the pinch while concentration was occurring. There is a plateau effect as concentration proceeds and the slopes of the different concentrations are quite different. This is observed repeatedly in pinch channel devices according to various embodiments of the present invention; the DNA appears to concentrate up to a certain point that is proportional to the starting signal. This means that the signal from a dilute sample cannot be increased to the same level as that from a more concentrated sample. It is also interesting to note that the degree of concentration (defined as the CCD signal at a given time divided by the starting signal) is roughly constant, in this case, an increase in concentration of from about 50X to about 70X. The 50X-70X increase in concentration can be attained regardless of the starting concentration, according to methods and devices according to various embodiments of the present invention. The present invention therefore can provide time-independent concentration that is still semi-quantitative. The phenomenon of starting concentration dependence is consistent with a leaky trap, where the leak rate is proportional to the concentration, which may be a model of what is occurring.

According to various embodiments of the present invention, the effect of ionic concentrations was tested by adding NaCl to the sample. The conditions were similar to those for the experiment described above and reported in the graph of Fig. 24. The sample was R6G-labeled 443nt dsDNA prepared in 0 mM, 5 mM, 10 mM, 50 mM, and 100 mM NaCl. Like the previous experiment reported in Fig. 24, the brightness of the concentrated band was measured on an imaging CCD and plotted as a function of time. The results, illustrated as a graph of the CCD signal plotted against NaCl concentration, are shown in Fig. 25.

The top three curves represent 0 mM, 5 mM, and 10 mM NaCl. Addition of salt up to 10 mM had no effect on the degree to which DNA concentrated. The bottom two curves, representing the presence of 50 mM NaCl and 100 mM NaCl, displayed a pronounced effect. The addition of salt at 50 mM and 100 mM significantly decreased the concentrating ability of the system. The buffer concentration was 10 mM Tris-Taps. Accordiong to various embodiments of the present invention, controlling the ratio of the sample ionic strength to the buffer ionic strength is used to determine how well a system concentrates.

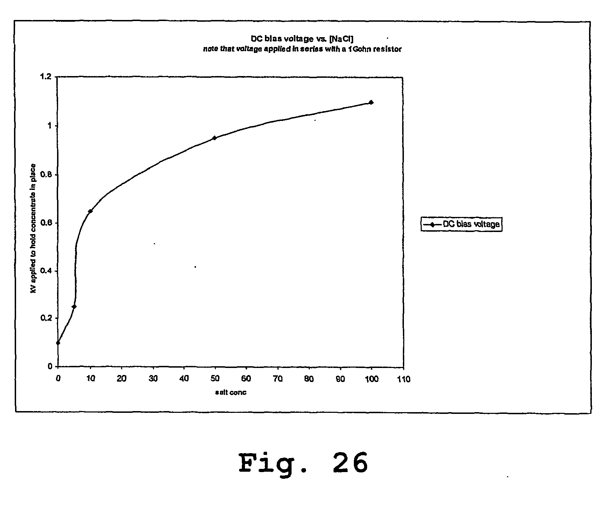

It was observed, according to various embodiments of the present invention, that the DC bias voltage needed to hold the concentrating band in place increased as a function of sample ionic strength. This observation can result from viewing the graph of applied DC bias voltage against NaCl concentration, as shown in Fig. 26. As shown in Fig. 26, as the salt concentration in the sample increased, so too did the applied bias voltage. While not wishing to be bound by theory, it is believed that this may be due to an increased voltage drop in the arms caused by the higher current of the salty samples, and that this is indicative of an inadequate AC power supply.

It was also observed that as the salt concentration of the sample was increased, the concentrating band seemed to be less stable. A "lava lamp" effect was observed where concentrating DNA seemed to circulate near the pinch point. While not wishing to be bound by theory, it is believed that the effect could be caused by heating in the channel. If heating effects were to occur in the channel it would be expected to occur, according to the present invention, at the pinch point because that is where the current density is the highest.

Several experiments were then performed to test concentration methods using the pinch channel devices according to various embodiments of the present invention, in a denaturing environment. A custom polymer system was used consisting of 4% pDMA and 10mM Tris-Taps buffer with no denaturants. This buffer system was used because of observations in earlier experiments that suggested instability of the concentrated band due to heating in the channel. Most problems with instability were mitigated using lower ionic strength buffer system in combination with smaller (72 X 30um) channels.

Most of results using endpoint detection were obtained using a denaturing polymer system. An exemplary polymer system that can be used is similar to POP6, except with 1/3 the buffer concentration (6.5% pDMA, 8M Urea, 5% 2-pyrrolidinone, 33mM Na-Taps w/EDTA). This system achieves a good balance between resistance to microbial growth and conductivity. It is also a denaturing system and gives better endpoint results than the Tris-Taps-based system.

Most of the foregoing Examples report results on testing with DNA fragments in the 400-700nt range. Several experiments were performed to determine if there is a cutoff in terms of DNA fragment length where the pinch channel devices of various embodiments of the present invention no longer effectively concentrate. It was determined that while larger fragments concentrated more effectively, fragments as small as 25nt can be concentrated with the pinch channel devices. Experimental results showed that, in general, fragments larger than 100nt could be concentrated and there was little difference in concentration efficiency between a 136nt and a 204nt fragment. It appeared as though 443nt and 731nt fragments concentrated more effectively than the 136nt and 204nt fragments. Finally, a controlled experiment on fragments less that 100nt showed a significant decrease in concentration as the size of the fragment decreased. For experiments using 75nt, 50nt, and 25nt fragments, the degree of concentration was 17X, 8X, and 3X, respectively.

The endpoint detector can be a stock 310 optics and laser assembly, turned 90 degrees and mounted on breadboard. A modification that can be made to the 310 is the removal of the capillary holder. Data collection for endpoint detection can be performed using 310 Data Collection software.

Sample background problems can occur in devices where the channel containing the pinch feature is filled with sample before the AC trapping voltage is applied. This complicates endpoint detection because the concentrated sample is embedded in a background of undesirable material, some of which may be fluorescent. For example, the simplest version of a pinch channel device would be a single long channel with a pinch feature near one end. The sample would concentrate at the pinch while other fluorescent garbage simply passed through the trap. The trapping field would then be removed and the concentrated band released. However, attempting to detect the concentrated sample band might be problematic in a highly fluorescent and changing background. Using channels with a pinch in the sidearm, as shown in Figs. 20a-20d, however, lessened this effect because the sample is "injected" into a clean channel, but still the material just before and after the trap makes its way into the main channel.

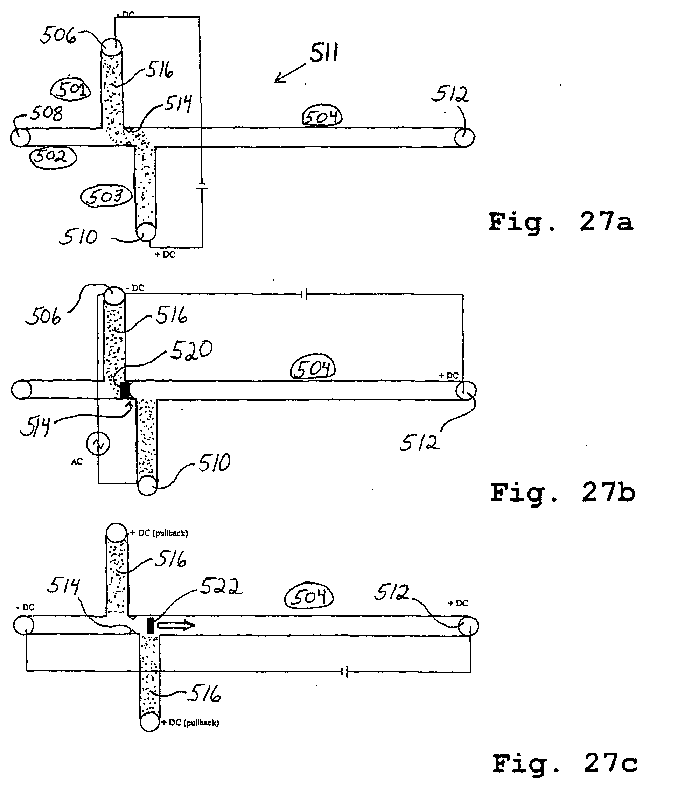

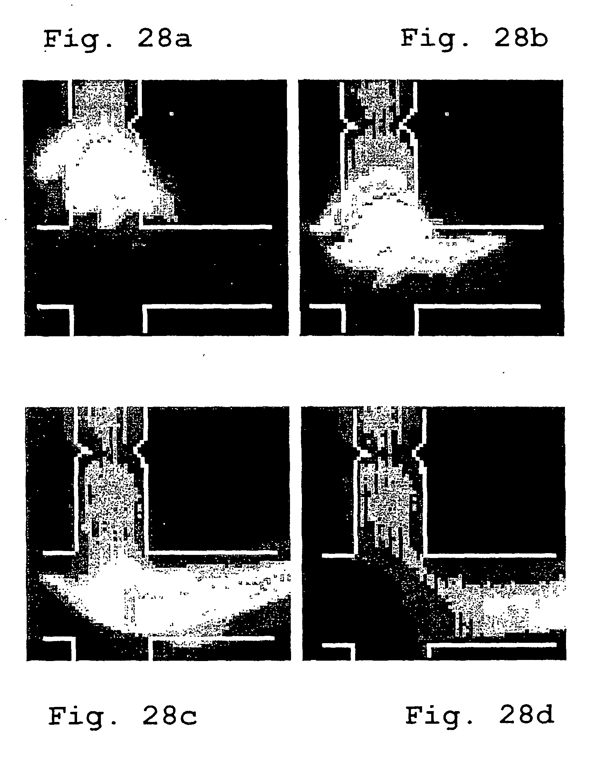

There can also be a problem with having the sample turn a corner into the main channel. Turning a 90 degree bend, as shown in Fig. 20c, causes significant distortion of the band. A rough estimate of the distortion is that a 50 µm-wide band released from the pinch lengthens to nearly 200 µm on turning the corner into the separation arm. This effect can be seen in the CCD images in Figs. 28a-28d. The problems just described could be mitigated by using a different device geometry that did not require a corner to be turned but still had a means to release into a clean channel. Figs. 27a-27c show a sample processed using an embodiment of the present invention having a geometry that allows the sample to pass a pinch into a clean channel. The pinch channel device 511 of Figs. 27a-27c includes thre short arms 501, 502, and 503, a separation arm 504, and reservoirs or input ports 506, 508, 510, and 512. The device 511 has been loaded with a sample 516. Figs. 27a-27c show an embodiment of the present invention wherein (Fig. 27a) a sample is loaded at the injection site, (Fig. 27b) the sample is concentrated at the pinch to form a concentrated DNA band 520, and (Fig. 27c) after the sample is released into the separation arm to provide a moving concentrated band 522, respectively. This device is called the "double-tee pinch."

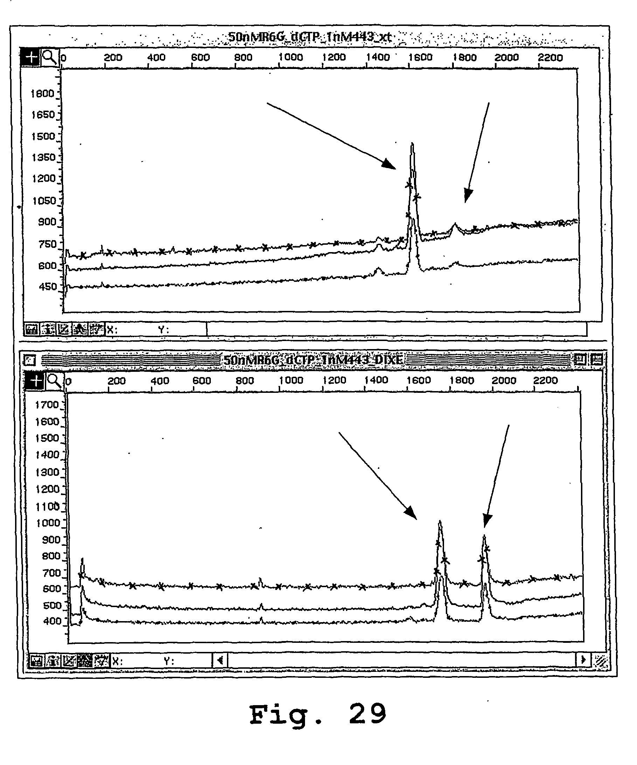

All of the endpoint data presented in this report were generated using the sidearm pinch geometry as shown in Figs. 20a-20d and Fig. 22. This geometry gave a high degree of concentration. The data as seen in Figs. 28a-28d show CCD images of a concentrated band of 443nt-R6G after release from a pinch trap (as seen in Fig. 28a), turning a corner (as seen in Figs. 28b and 28c), and moving into a main separation channel (as seen in Fig. 28d). The starting sample was 1nM 443-R6G with 50nM dCTP-R6G. The R6G-labeled dCTP was used as an internal standard because it does not concentrate at the pinch. The electropherograms obtained at endpoint, as illustrated in screenshots, as shown in Fig. 29. The electropherograms of Fig. 29 demonstrate enrichment of the 443nt fragment relative to the unconcentrated dCTP. In Fig. 29, electropherograms of the control run, seen in the top half of the figure, and the sample run using an embodiment of the present invention, seen in the lower half of the figure, are shown. While the degree of concentration is modest, 7X in this case, it demonstrates enrichment of DNA relative to other species present in the mixture.

There is always some level of sample background in the channel surrounding the trap, and this material often gets injected into the main channel along with the concentrated band. The present invention provides ways to minimize this problem. A first method of minimizing the background problem is by changing the sample geometry so that there is minimal background near the trap. This is the basis of the double-tee pinch geometry, as shown in a schematic in Figs. 27a-27c. In the double-tee pinch geometry there is a very small volume in the double tee that contains background. A second method involves cleaning out the trap with fresh buffer. The method includes beginning trapping and then replacing the sample in the sample reservoir with buffer. The small DC bias voltage will eventually move all of the sample in the arms past the trap and replace it with fresh buffer from the reservoir. All that will remain is the material in the trap itself. Problems associated with this second method can be mitigated by increasing the holding power of the trap, for example, by increasing the AC trapping voltage.

Those having ordinary skill in the electrophoresis art will clearly understand that many modifications are possible in the above various embodiments of the present invention without departing from the teachings thereof. All such modifications are intended to be encompassed within the following claims.

## Claims

1. A channel device, comprising:
an elongate channel including a first end and a second end;
at least two electrodes, each electrode being disposed near one of said ends; and
at least one energy source disposed for electrical communication with said electrodes and operable to simultaneously apply a DC potential along at least a portion of said channel and an AC potential along at least a portion of said channel;
wherein said channel is configured to cause an electric field established by application of said potentials to form a field gradient at one or more regions within the channel having a field strength that, upon loading a sample containing a polarizable analyte into one of said channel ends, attracts or repulses the polarizable analyte.

2. The device of claim 1, wherein at least one field gradient so formed attracts the polarizable analyte.

3. The device of claim 1 or claim 2, wherein said channel has a variable cross-sectional area, taken along a plane normal to a longitudinal axis of said channel; said cross-sectional area being less than 1 micrometer across at a narrowest region of the channel.

4. The device according to any preceding claim, wherein said channel has a constant cross-sectional area, taken along a plane normal to a longitudinal axis of said channel; said cross-sectional area being less than 1 micrometer.

5. The device according to any preceding claim, wherein said channel comprises a groove formed in a plate or chip.

6. The device according to any preceding claim, wherein at least one field gradient so formed is effective to attract or repulse a polarizable analyte less than 1 micrometer across in its longest dimension.

7. The device of claim 6, wherein said at least one field gradient so formed is effective to attract or repulse a polarizable analyte comprising a sub-cellular bio-molecule.

8. The device of claim 6 or claim 7, wherein said at least one field gradient so formed is effective to attract or repulse a polarizable analyte comprising a polynucleotide.

9. The device according to any preceding claim, wherein said at least one energy source is selectable between at least two conditions, including (i) a first condition wherein a DC field is applied in a first orientation, and (ii) a second condition wherein said DC field is applied in a second orientation, being the reverse of the first orientation.

10. The device according to any of claims 1-8, wherein said at least one energy source is selectable between at least two conditions, including (i) a first condition wherein said DC and AC potentials are applied individually, one at a time, and (ii) a second condition wherein said DC and AC potentials are applied in concert, both at the same time.

11. The device according to any preceding claim, wherein said at least one energy source includes a DC generator and an AC generator.

12. The device according to any preceding claim, wherein said at least one energy source and said at least two electrodes are adapted to apply said AC potential superposed over at least a portion of said DC potential.

13. The device according to any preceding claim, further comprising a plurality of electrodes arranged at spaced-apart locations along the channel and communicating with said at least one energy source so that adjacent pairs of said plurality of electrodes can establish local AC fields at respective positions within the channel.

14. The device according to any preceding claim, wherein the channel includes one or more islands extending into the channel, with the islands configured to contribute to formation of said field gradient.

15. The device of claim 14, wherein at least one of the one or more islands is generally tear-shaped.

16. The device according to any preceding claim, further comprising wall structure defining boundaries for said channel, with the wall structure including one or more surface features configured to contribute to formation of said field gradient.

17. The device of claim 16, wherein said surface features are configured to induce field gradient formation at locations adjacent thereto.

18. The device of claim 16 or claim 17, wherein said wall structure is comprised of an insulating material.

19. The device of claim 18, wherein said material is selected from the group consisting of plastic, glass, oxidized silicon, and any combination thereof.

20. The device of according to any of claims 16-19, wherein said surface features define one or more shapes selected from the group consisting of edges, corners, angles, bumps, dips, protrusions, teeth, undulations, serrations, notches, protuberances, indentations, waves, ripples, fins, rods, cones, pegs, and any combination thereof.

21. The device according to any of claims 16-20, wherein said surface features define a generally undulating topography along said wall structure.

22. The device according to any of claims 16-20, wherein said surface features define a generally sawtoothed or serrated topography along said wall structure.

23. The device according to any of claims 16-20, wherein said surface features define a generally wave-like topography along said wall structure.

24. The device according to any of claims 16-20, wherein said surface features define a generally rippled topography along said wall structure.

25. The device according to any preceding claim, further comprising a second elongate channel including a first end and a second end, with said second channel intersecting the first channel.

26. The device of claim 25, wherein the intersecting channels define a T-format intersection.

27. The device of claim 25, wherein the intersecting channels define one or more corners disposed to contribute to formation of the field gradient

28. The device of claim 27, wherein at least one corner defines a right angle.

29. The device of claim 27, wherein at least one corner defines an oblique angle.

30. The device of claim 25, wherein the intersecting channels define a generally Y-shaped intersection.

31. The device according to any of claims 25-30, wherein one or both of the channels include one or more regions of varying cross-sectional area, taken along a plane normal to a longitudinal axis of the channel, configured to contribute to formation of the field gradient.

32. The device of claim 31, wherein at least one varying cross-sectional area region includes a constriction.

33. The device according to any of claims 16-32, wherein said surface features are located along one wall of said channel and an opposing wall of said channel is free of such surface features.

34. The device of claim 33, wherein a line running longitudinally along said opposing wall is generally straight or gently curved.

35. The device according to any preceding claim, further comprising a reservoir positioned adjacent and disposed for communication with said one or more of said ends.

36. The device according to claim 16, wherein said surface features are configured to induce field gradient formation at defined locations within the channel upon application of an electric field established by application of said potentials, so that, upon loading a sample containing a polarizable analyte into said channel, the polarizable analyte is focused by said field to one or more defined locations within the channel.

37. The device of claim 36, wherein said polarizable analyte is focused to no more than three defined locations within the channel.

38. The device of claim 36 or claim 37, further comprising an access port permitting communication with at least one of said defined locations.

39. The device of claim 38, wherein said access port includes a closure operable between at least two conditions, including (i) an open condition, and (ii) a closed condition.

40. A method for purifying a sample containing a target polarizable analyte and one or more contaminants, comprising the steps of: loading said sample into a channel device including an elongate channel; applying AC and DC potentials along at least portions of the channel, with the potentials being applied simultaneously for at least a portion of said applying, such that one or more field gradients are formed within the channel, said field gradients causing the target analyte in the sample to migrate to, and concentrate at, one or more localized regions within the channel; wherein said applying is effective to reduce the concentration of contaminants relative to the concentration of target analyte, thereby producing a purified analyte.

41. The method of claim 40, wherein one or more of said field gradients define said one or more localized regions to which said target analyte migrates.

42. The method of claim 40 or claim 41, wherein said channel has a variable cross-sectional area, taken along a plane normal to a longitudinal axis of the channel; said cross-sectional area being less than 1 micrometer at a narrowest region of the channel.

43. The method of claim 40 or claim 41, wherein said channel has a constant cross-sectional area, taken along a plane normal to a longitudinal axis of the channel; said cross-sectional area being less than 1 micrometer.

44. The method according to any of claims 40-43, wherein the analyte comprises one or more sub-cellular bio-molecules.

45. The method according to any of claims 40-44, wherein the analyte comprises one or more polynucleotides.

46. The method of claim 45, wherein said polynucleotide includes one or more DNA or RNA fragments.

47. The method according to any of claims 40-46, wherein said DC potential is formed using a DC generator and said AC potential is formed using an AC generator.

48. The method according to any of claims 40-47, wherein said AC potential is superposed over at least a portion of said DC potential.

49. The method according to any of claims 40-48, wherein a plurality of AC potentials are formed within the channel at respective spaced-apart positions along a wall of the channel.

50. The method according to any of claims 40-49, wherein one or more islands are disposed at positions within the channel, and said one or more field gradients are formed near said islands.

51. The method according to any of claims 40-50, wherein said channel includes wall structure defining boundaries therefor, and said one or more field gradients are formed at positions near said wall structure.

52. The method of claim 51, wherein said wall structure is comprised of an insulating material.

53. The method of claim 51 or claim 52, wherein said wall structure includes one or more surface features, and said one or more field gradients are formed at positions near said surface features.

54. The method of claim 53, wherein said surface features are located on a wall of said channel, and an opposing wall of said channel is free of such surface features.

55. The method according to any of claims 40-54, wherein said channel device includes at least two elongate channels, with one of said channels intersecting another of said channels.

56. The method of claim 55, wherein said one or more field gradients are formed near one or more corners defined by the intersecting channels.

57. The method according to any of claims 40-56, wherein said channel includes one or more regions of varying cross-sectional area, taken along a plane normal to a longitudinal axis of the channel; and said field gradient is formed near said one or more regions of varying crosssectional area.

58. The method according to any of claims 40-57, wherein said channel device further comprises one or more reservoirs, each disposed for fluid communication with an end of said channel; and said loading includes placing the sample in one such reservoir.

59. The method of claim 58, further comprising placing a buffer solution in another such reservoir.

60. The method according to any of claims 40-59, further comprising electrophoresing the purified analyte, thereby resolving the analyte into one or more analyte zones.

61. The method according to any of claims 40-60, further comprising recovering the purified analyte.

62. The method according to any of claims 40-61, wherein said field gradients are formed along one side of said channel and an opposing side of the channel is free of such gradients, so that the target analyte is attracted to and concentrates along a marginal region of said channel along said one side.

63. The method of claim 62, further comprising directing the concentrated target analyte from said one side into a first collection region.

64. The method of claim 63, further comprising directing sample components not attracted to said marginal region into a second collection region, separated from said first collection region.

65. The method according to any of claims 40-64, further comprising discontinuing the AC potential and, with the AC potential discontinued, reversing the DC potential, thereby causing the concentrated target analyte to migrate in a reverse direction.

66. The method of claim 65, further comprising, after reversing the DC potential and allowing the target analyte to migrate in the reverse direction, collecting the target analyte.

67. A channel device comprising:
a primary channel having a first end and a second end, a loading region disposed for fluid communication with said first end, a first collection region disposed for fluid communication with said second end, a secondary channel having an inlet end disposed for fluid communication with said primary channel at a region nearer said second end than said first end, and a second collection region disposed for fluid communication with an outlet end of said secondary channel;
at least three electrodes, each electrode being disposed near a respective one of said loading, first-collection, and second-collection regions; and
at least one energy source disposed for electrical communication with said electrodes and operable to simultaneously apply a DC potential along at least a portion of both of said channels and an AC potential along at least a portion of said primary channel;
wherein said primary channel is configured to cause an electric field established by application of said potentials to form a field gradient at plural regions within the channel, said field gradients having a field strength that, upon loading a sample containing a polarizable analyte into said loading region, attracts or repulses the polarizable analyte.

68. The device of claim 67, wherein said primary channel includes a plurality of electrode pairs disposed at spaced locations along its length, each pair being adapted to generate a respective AC field within an adjacent region of the primary channel.

69. The device of claim 67 or claim 68, wherein said primary channel includes wall structure defining boundaries therefor, said wall structure including surface features defining one or more shapes selected from the group consisting of edges, corners, angles, bumps, dips, protrusions, teeth, undulations, serrations, notches, protuberances, indentations, waves, ripples, fins, rods, cones, pegs, and any combination thereof.

70. The device of claim 69, wherein said wall structure is formed on one wall of said channel and an opposing wall of said channel is free of such wall structure.

71. The device of claim 69, wherein said wall structure is formed on more than one wall of said channel.

72. The device according to any of claims 67-71, wherein said channel comprises a groove formed in a plate or chip.

73. The device according to any of claims 67-71, wherein said loading region comprises a loading reservoir, said first collection region comprises a waste reservoir, and said second collection region comprises a purified-analyte reservoir.

74. The device according to any of claims 1-39 or 67-73, comprising:
at least one elongate channel including a first end and a second end and having an average cross-sectional area, and a pinch region having a cross-sectional area that is less than the average cross-sectional area;
wherein said channel is configured to cause an electric field established by application of said potentials to form a field gradient at said pinch region within the channel having a field strength that, upon loading a sample containing a polarizable analyte into one of said channel ends, attracts or repulses the polarizable analyte.

75. The device of claim 74, wherein said at least one elongate channel comprises at least two channels that intersect one another.

76. The device of claim 74 or claim 75, wherein said at least one elongate channel includes a separation channel and a side channel that intersects said separation channel, wherein the pinch region is located in the side channel.

77. The device of claim 76, wherein the side channel has a first length and the separation channel has a second length that is longer than the first length.

78. A purifying device configured to purify a sample containing a target polarizable analyte and one or more contaminants, comprising a channel device according to claim 1.

## Patentansprüche

1. Kanal-Vorrichtung mit:
einem langgestreckten Kanal, der ein erstes Ende und ein zweites Ende einschließt;
zumindest zwei Elektroden, wobei jede Elektrode in der Nähe eines der Enden angeordnet ist; und
zumindest eine Energiequelle, die zur elektrischen Verbindung mit den Elektroden angeordnet und betreibbar ist, um gleichzeitig ein Gleichspannungspotential entlang zumindest eines Teils des Kanals und ein Wechselspannungspotential entlang zumindest eines Teils des Kanals anzulegen;
worin der Kanal so konfiguriert ist, dass bewirkt wird, dass ein durch das Anlegen der Potentiale ausgebildetes elektrisches Feld einen Feldgradienten an einem oder mehreren Bereichen innerhalb des Kanals mit einer Feldstärke bildet, die beim Laden einer einen polarisierbaren Analyten enthaltenden Probe in eines der Kanal-Enden den polarisierbaren Analyten anzieht oder abstößt.

2. Vorrichtung nach Anspruch 1, bei der zumindest ein auf diese Weise gebildeter Feldgradient den polarisierbaren Analyten anzieht.

3. Vorrichtung nach Anspruch 1 oder 2, bei der der Kanal eine veränderliche Querschnittsfläche entlang einer Ebene senkrecht zur Längsachse des Kanals aufweist, wobei die Querschnittsfläche über einen engsten Bereich des Kanals kleiner als ein Mikrometer ist.

4. Vorrichtung nach einem der vorhergehenden Ansprüche, bei der der Kanal eine konstante Querschnittsfläche entlang einer Ebene senkrecht zur Längsachse des Kanals aufweist, wobei die Querschnittsfläche kleiner als ein Mikrometer ist.

5. Vorrichtung nach einem der vorhergehenden Ansprüche, bei der der Kanal eine Nut umfasst, die in einer Platte oder einem Chip gebildet ist.

6. Vorrichtung nach einem der vorhergehenden Ansprüche, bei der zumindest eine so gebildete Feldgradient zum Anziehen oder Abstoßen eines polarisierbaren Analyten über weniger als ein Mikrometer in seiner längsten Abmessung wirksam ist.

7. Vorrichtung nach Anspruch 6, bei der der zumindest eine so gebildete Feldgradient zum Anziehen oder Abstoßen eines polarisierbaren Analyten wirksam ist, der ein sub-zellulares Biomolekül umfasst.

8. Vorrichtung nach Anspruch 6 oder 7, bei der der zumindest eine so gebildete Feldgradient zum Anziehen oder Abstoßen eines polarisierbaren Analyten wirksam ist, der ein Polynukleotid umfasst.

9. Vorrichtung nach einem der vorhergehenden Ansprüche, bei der die zumindest eine Energiequelle zwischen zumindest zwei Zuständen auswählbar ist, die (i) einen ersten Zustand, bei dem ein Gleichspannungsfeld in einer ersten Richtung angelegt wird, und (ii) einen zweiten Zustand einschließen, bei dem das Gleichspannungsfeld in einer zweiten Richtung angelegt ist, die entgegengesetzt zur ersten Richtung ist.

10. Vorrichtung nach einem der Ansprüche 1-8, bei der die zumindest eine Energiequelle zwischen zumindest zwei Zuständen auswählbar ist, die (i) einen ersten Zustand, in dem die Gleichspannungs- und Wechselspannungspotentiale einzeln angelegt werden, eines zu irgendeiner Zeit, und (ii) einen zweiten Zustand einschließen, bei dem die Gleichspannungs- und Wechselspannungspotentiale gemeinsam, beide zur gleichen Zeit, angelegt werden.

11. Vorrichtung nach einem der vorhergehenden Ansprüche, bei der die zumindest eine Energiequelle einen Gleichspannungsgenerator und einen Wechselspannungsgenerator einschließt.

12. Vorrichtung nach einem der vorhergehenden Ansprüche, bei der die zumindest eine Energiequelle und die zumindest zwei Elektroden so ausgebildet sind, dass sie das Wechselspannungspotential überlagert über zumindest einem Teil des Gleichspannungspotentials anlegen.

13. Vorrichtung nach einem der vorhergehenden Ansprüche, die weiterhin eine Vielzahl von Elektroden umfasst, die an einen Abstand voneinander aufweisenden Stellen entlang des Kanals angeordnet und mit der zumindest einen Energiequelle verbunden sind, so dass benachbarte Paare der Anzahl von Elektroden örtliche Wechselspannungsfelder an jeweiligen Positionen innerhalb des Kanals ausbilden können.

14. Vorrichtung nach einem der vorhergehenden Ansprüche, bei der der Kanal ein oder mehrere sich in den Kanal erstreckende Inseln einschließt, wobei die Inseln so konfiguriert sind, dass sie zur Bildung des Feldgradienten beitragen.

15. Vorrichtung nach Anspruch 14, bei der zumindest eine der ein oder mehreren Inseln allgemein tränenförmig geformt ist.

16. Vorrichtung nach einem der vorhergehenden Ansprüche, die weiterhin eine Wandstruktur umfasst, die Begrenzungen für den Kanal bildet, wobei die Wandstruktur ein oder mehrere Oberflächenmerkmale einschließt, die so konfiguriert sind, dass sie zur Bildung des Feldgradienten beitragen.

17. Vorrichtung nach Anspruch 16, bei der die Oberflächenmerkmale so konfiguriert sind, dass sie eine Feldgradienten-Bildung an hierzu benachbarten Stellen induzieren.

18. Vorrichtung nach Anspruch 16 oder 17, bei der die Wandstruktur aus einem Isoliermaterial besteht.

19. Vorrichtung nach Anspruch 18, bei der das Material aus der Gruppe ausgewählt ist, die aus Kunststoff, Glas, oxidiertem Silizium und irgendeiner Kombination hiervon besteht.

20. Vorrichtung nach einem der Ansprüche 16-19, bei der die Oberflächenmerkmale ein oder mehrere Formen bilden, die aus der Gruppe ausgewählt sind, die aus Kanten, Ecken, Winkeln, Erhebungen, Einsenkungen, Vorsprüngen, Zähnen, Wellen, Verzahnungen, Kerben, Vorsprüngen, Einprägungen, Wellen, Riffelungen, Rippen, Stangen, Kegeln, Zapfen und irgendeiner Kombination hiervon besteht.

21. Vorrichtung nach einem der Ansprüche 16-20, bei der die Oberflächenmerkmale eine allgemein wellige Topographie entlang der Wandstruktur bilden.

22. Vorrichtung nach einem der Ansprüche 16-20, bei der die Oberflächenmerkmale eine allgemein sägezahnförmige oder gezahnte Topographie entlang der Wandstruktur bilden.

23. Vorrichtung nach einem der Ansprüche 16-20, bei der die Oberflächenmerkmale eine allgemein wellenförmige Topographie entlang der Wandstruktur bilden.

24. Vorrichtung nach einem der Ansprüche 16-20, bei der die Oberflächenmerkmale eine allgemein geriffelte Topographie entlang der Wandstruktur bilden.

25. Vorrichtung nach einem der vorhergehenden Ansprüche, die weiterhin einen zweiten langgestreckten Kanal umfasst, der ein erstes Ende und ein zweites Ende einschließt, wobei der zweite Kanal den ersten Kanal schneidet.

26. Vorrichtung nach Anspruch 25, bei der die sich schneidenden Kanäle einen T-förmigen Schnittpunkt bilden.

27. Vorrichtung nach Anspruch 25, bei der die sich schneidenden Kanäle eine oder mehrere Ecken bilden, die so angeordnet sind, dass sie zur Bildung des Feldgradienten beitragen.

28. Vorrichtung nach Anspruch 27, bei der die zumindest eine Ecke einen rechten Winkel bildet.

29. Vorrichtung nach Anspruch 28, bei der die zumindest eine Ecke einen schrägen Winkel bildet.

30. Vorrichtung nach Anspruch 25, bei der die sich schneidenden Kanäle einen allgemein Y-förmigen Kreuzungspunkt bilden.

31. Vorrichtung nach einem der Ansprüche 25-30, bei der einer oder beide der Kanäle einen oder mehrere Bereiche mit sich ändernder Querschnittsfläche entlang einer Ebene senkrecht zur Längsachse des Kanals einschließen, die so konfiguriert sind, dass sie zur Bildung des Feldgradienten beitragen.

32. Vorrichtung nach Anspruch 31, bei der zumindest ein Bereich mit sich ändernder Querschnittsfläche eine Einschnürung einschließt.

33. Vorrichtung nach einem der Ansprüche 16-32, bei der die Oberflächenmerkmale entlang einer Wand des Kanals angeordnet sind und eine gegenüberliegende Wand des Kanals frei von derartigen Oberflächenmerkmalen ist.

34. Vorrichtung nach Anspruch 33, bei der eine Linie, die in Längsrichtung entlang der gegenüberliegenden Wand verläuft, allgemein geradlinig oder sanft gekrümmt ist.

35. Vorrichtung nach einem der vorhergehenden Ansprüche, die weiterhin ein Reservoir umfasst, das benachbart zu dem einen oder mehreren der Enden angeordnet und für eine Verbindung mit diesen angeordnet ist.

36. Vorrichtung nach Anspruch 16, bei der die Oberflächenmerkmale so konfiguriert sind, dass sie eine Feldgradienten-Bildung an definierten Stellen innerhalb des Kanals bei Anlegen eines elektrischen Feldes induzieren, das durch das Anlegen der Potentiale ausgebildet wird, so dass beim Laden einer einen polarisierbaren Analyten enthaltenden Probe in den Kanal der polarisierbare Analyt durch das Feld auf eine oder mehrere definierte Stellen innerhalb des Kanals fokussiert wird.

37. Vorrichtung nach Anspruch 36, bei der der polarisierbare Analyt auf nicht mehr als drei definierte Stellen innerhalb des Kanals fokussiert wird.

38. Vorrichtung nach Anspruch 36 oder 37, die weiterhin einen Zugangs-Port umfasst, der eine Verbindung mit zumindest einer der definierten Stellen ermöglicht.

39. Vorrichtung nach Anspruch 38, bei der der Zugangs-Port einen Verschluss einschließt, der in zumindest zwei Zuständen betreibbar ist, die (i) einen offenen Zustand und (ii) einen geschlossenen Zustand einschließen.

40. Verfahren zum Reinigen einer Probe, die einen polarisierbaren Ziel-Analyten und ein oder mehrere Verunreinigungen enthält, mit den folgenden Schritten: Laden der Probe in eine Kanal-Vorrichtung, die einen langgestreckten Kanal einschließt; Anlegen von Wechselspannungs- und Gleichspannungspotentialen entlang zumindest eines Teils des Kanals, wobei die Potentiale gleichzeitig über zumindest einen Teil des Anlegens angelegt werden, derart, dass ein oder mehrere Feldgradienten innerhalb des Kanals gebildet werden, wobei die Feldgradienten bewirken, dass der Ziel-Analyt in der Probe zu einem oder mehreren lokalisierten Bereichen innerhalb des Kanals wandert oder sich dort konzentriert, wobei das Anlegen wirksam ist, um die Konzentration von Verunreinigungen bezogen auf die Konzentration des Ziel-Analyten zu verringern, wodurch ein gereinigter Analyt erzeugt wird.

41. Verfahren nach Anspruch 40, bei dem einer oder mehrere der Feldgradienten den einen oder mehrere lokalisierte Bereiche bilden, zu denen der Ziel-Analyt wandert.

42. Verfahren nach Anspruch 40 oder Anspruch 41, bei dem der Kanal eine veränderbare Querschnittsfläche entlang einer Ebene senkrecht zur Längsachse des Kanals aufweist, wobei die Querschnittsfläche an einem engsten Bereich des Kanals kleiner als ein Mikrometer ist.

43. Verfahren nach Anspruch 40 oder Anspruch 41, bei dem der Kanal eine konstante Querschnittsfläche entlang einer Ebene senkrecht zu einer Längsachse des Kanals aufweist, wobei die Querschnittsfläche kleiner als ein Mikrometer ist.

44. Verfahren nach einem der Ansprüche 40-43, bei dem der Analyt ein oder mehrere sub-zellulare Biomoleküle umfasst.

45. Verfahren nach einem der Ansprüche 40-44, bei dem der Analyt ein oder mehrere Polynukleotide umfasst.

46. Verfahren nach Anspruch 45, bei dem das Polynukleotid ein oder mehrere DNA- oder RNA-Fragmente einschließt.

47. Verfahren nach einem der Ansprüche 40-46, bei dem das Gleichspannungspotential unter Verwendung eines Gleichspannungsgenerators gebildet wird, und das Wechselspannungspotential unter Verwendung eines Wechselspannungsgenerators gebildet wird.

48. Verfahren nach einem der Ansprüche 40-47, bei dem das Wechselspannungspotential über zumindest einen Teil des Gleichspannungspotentials überlagert ist.

49. Verfahren nach einem der Ansprüche 40-48, bei dem eine Anzahl von Wechselspannungspotentialen in dem Kanal an jeweiligen einen Abstand voneinander aufweisenden Positionen entlang einer Wand des Kanals gebildet wird.

50. Verfahren nach einem der Ansprüche 40-49, bei dem eine oder mehrere Inseln an Positionen innerhalb des Kanals angeordnet sind und der eine oder die mehreren Feldgradienten in der Nähe der Inseln gebildet werden.

51. Verfahren nach einem der Ansprüche 40-50, bei dem der Kanal eine Wandstruktur einschließt, die Begrenzungen für diesen Kanal bildet, und wobei der eine oder die mehreren Feldgradienten an Positionen in der Nähe der Wandstruktur gebildet werden.

52. Verfahren nach Anspruch 51, bei dem die Wandstruktur aus Isoliermaterial besteht.

53. Verfahren nach Anspruch 51 oder 52, bei dem die Wandstruktur ein oder mehrere Oberflächenmerkmale einschließt und der eine oder die mehreren Feldgradienten an Positionen in der Nähe der Oberflächenmerkmale gebildet werden.

54. Verfahren nach Anspruch 53, bei dem die Oberflächenmerkmale an einer Wand des Kanals angeordnet sind und eine gegenüberliegende Wand des Kanals frei von derartigen Oberflächenmerkmalen ist.

55. Verfahren nach einem der Ansprüche 40-54, bei dem die Kanal-Vorrichtung zumindest zwei langgestreckte Kanäle einschließt, wobei einer der Kanäle den anderen der Kanäle schneidet.

56. Verfahren nach Anspruch 55, bei dem der eine oder die mehreren Feldgradienten in der Nähe einer oder mehrerer Ecken gebildet werden, die durch die sich schneidenden Kanäle gebildet sind.

57. Verfahren nach einem der Ansprüche 40-56, bei dem der Kanal ein oder mehrere Bereiche mit sich ändernder Querschnittsfläche entlang einer Ebene senkrecht zur Längsachse des Kanals einschließt, und wobei der Feldgradient in der Nähe des einen oder mehrerer Bereiche mit sich ändernder Querschnittsfläche gebildet wird.

58. Verfahren nach einem der Ansprüche 40-57, bei dem die Kanalvorrichtung weiterhin ein oder mehrere Reservoire umfasst, die jeweils für eine Strömungsmittelverbindung mit einem Ende des Kanals angeordnet sind, und wobei das Laden das Anordnen der Probe in einem derartigen Reservoir einschließt.

59. Verfahren nach Anspruch 58, das weiterhin das Einbringen einer Pufferlösung in ein anderes derartiges Reservoir umfasst.

60. Verfahren nach einem der Ansprüche 40-59, das weiterhin eine Elektrophoresebehandlung des gereinigten Analyten umfasst, wodurch der Analyt in eine oder mehrere Analyt-Zonen aufgelöst wird.

61. Verfahren nach einem der Ansprüche 40-60, das weiterhin die Rückgewinnung des gereinigten Analyten umfasst.

62. Verfahren nach einem der Ansprüche 40-61, bei dem Feldgradienten entlang einer Seite des Kanals gebildet werden und eine gegenüberliegende Seite des Kanals frei von derartigen Gradienten ist, so dass der Ziel-Analyt entlang eines Randbereichs des Kanals entlang der einen Seite angezogen und konzentriert wird.

63. Verfahren nach Anspruch 62, das weiterhin das Lenken des konzentrierten Ziel-Analyten von einer Seite in einen ersten Sammelbereich umfasst.

64. Verfahren nach Anspruch 63, das weiterhin das Lenken von nicht an den Randbereich angezogenen Probenbestandteilen in einen zweiten Sammelbereich umfasst, der von dem ersten Sammelbereich getrennt ist.

65. Verfahren nach einem der Ansprüche 40-64, das weiterhin die Unterbrechung des Wechselspannungspotentials und das Umkehren, bei unterbrochenem Wechselspannungspotential, des Gleichspannungspotentials umfasst, wodurch ein Wandern des konzentrierten Ziel-Analyten in einer entgegengesetzten Richtung bewirkt wird.

66. Verfahren nach Anspruch 65, das weiterhin nach dem Umkehren des Gleichspannungspotentials und dem Zulassen, dass der Ziel-Analyt in der gegengesetzten Richtung wandert, das Sammeln des Ziel-Analyten umfasst.

67. Kanalvorrichtung mit:
einem primären Kanal, der ein erstes Ende und ein zweites Ende aufweist, einem Ladebereich, der für eine Strömungsmittelverbindung mit dem ersten Ende angeordnet ist, einem ersten Sammelbereich, der für eine Strömungsmittelverbindung mit dem zweiten Ende angeordnet ist, einem sekundären Kanal, der ein Einlassende, das für eine Strömungsmittelverbindung mit dem primären Kanal an einem Bereich angeordnet ist, der näher an dem zweiten Ende als an dem ersten Ende liegt, und einen zweiten Sammelbereich aufweist, der für eine Strömungsmittelverbindung mit einem Auslassende des sekundären Kanals angeordnet ist;
zumindest drei Elektroden, wobei jede Elektrode in der Nähe eines jeweiligen der genannten Lade-, ersten Sammelbereiche und zweiten Sammelbereiche angeordnet ist; und
zumindest einer Energiequelle, die für eine elektrische Verbindung mit den Elektroden angeordnet und betreibbar ist, um gleichzeitig ein Gleichspannungspotential entlang zumindest eines Teils beider der Kanäle und ein Wechselspannungspotential entlang zumindest eines Teils des primären Kanals anzulegen;
wobei der primäre Kanal so konfiguriert ist, dass er bewirkt, dass ein durch das Anlegen der Potentiale ausgebildetes elektrisches Feld einen Feldgradienten an mehreren Bereichen innerhalb des Kanals bildet, wobei die Feldgradienten eine Feldstärke aufweisen, die beim Laden einer einen polarisierbaren Analyten enthaltenden Probe in den Ladebereich den polarisierbaren Analyten anzieht oder abstößt.

68. Vorrichtung nach Anspruch 67, bei der der primäre Kanal eine Anzahl von Elektrodenpaaren einschließt, die an mit Abstand voneinander angeordneten Stellen entlang seiner Länge angeordnet sind, wobei jedes Paar zur Erzeugung eines jeweiligen Wechselspannungsfeldes innerhalb eines benachbarten Bereiches des primären Kanals ausgebildet ist.

69. Vorrichtung nach Anspruch 67 oder 68, bei der der primäre Kanal eine Wandstruktur einschließt, die für diesen Begrenzungen bildet, wobei die Wandstruktur Oberflächenmerkmale einschließt, die eine oder mehrere Formen bilden, die aus der Gruppe ausgewählt sind, die aus Kanten, Ecken, Winkeln, Erhebungen, Einsenkungen, Vorsprüngen, Wellungen, Riffelungen, Verzahnungen, Kerben, Vorsprüngen, Einprägungen, Wellen, Riffelungen, Rippen, Stäben, Kegeln, Zapfen und irgendeiner Kombination hiervon besteht.

70. Vorrichtung nach Anspruch 69, bei der die Wandstruktur auf einer Wand des Kanals ausgebildet ist und eine gegenüberliegende Wand des Kanals frei von einer derartigen Wandstruktur ist.

71. Vorrichtung nach Anspruch 69, bei der die Wandstruktur auf mehr als einer Wand des Kanals gebildet ist.

72. Vorrichtung nach einem der Ansprüche 67-71, bei der der Kanal eine in einer Platte oder einen Chip gebildete Nut umfasst.

73. Vorrichtung nach einem der Ansprüche 67-71, bei der der Ladebereich ein Lade-Reservoir umfasst, der erste Sammelbereich ein Abfall-Reservoir umfasst, und der zweite Sammelbereich ein Reservoir für einen gereinigten Analyten umfasst.

74. Vorrichtung nach einem der Ansprüche 1-39 oder 67-73, mit:
zumindest einem langgestreckten Kanal, der ein erstes Ende und ein zweites Ende einschließt und eine mittlere Querschnittsfläche und einen Einschnürungsbereich aufweist, der eine Querschnittsfläche aufweist, die kleiner als die mittlere Querschnittsfläche ist;
wobei der Kanal so konfiguriert ist, dass er bewirkt, dass ein durch Anlegen der Potentiale ausgebildetes elektrisches Feld einen Feldgradienten an dem Einschnürungsbereich in dem Kanal bildet, der eine Feldstärke aufweist, die beim Laden einer einen polarisierbaren Analyten enthaltenden Probe in das eine der Kanalenden den polarisierbaren Analyten anzieht oder abstößt.

75. Vorrichtung nach Anspruch 74, bei der der zumindest eine langgestreckte Kanal zumindest zwei Kanäle umfasst, die einander schneiden.

76. Vorrichtung nach Anspruch 74 oder 75, bei der der zumindest eine langgestreckte Kanal einen Trennkanal und einen Seitenkanal einschließt, der den Trennkanal schneidet, wobei sich der Einschnürungsbereich in dem Seitenkanal befindet.

77. Vorrichtung nach Anspruch 76, bei der der Seitenkanal eine erste Länge aufweist, und der Trennkanal eine zweite Länge aufweist, die größer als die erste Länge ist.

78. Reinigungsvorrichtung, die zur Reinigung einer einen polarisierbaren Ziel-Analyten und eine oder mehrere Verunreinigungen enthaltenden Probe konfiguriert ist, mit einer Kanalvorrichtung nach Anspruch 1.

## Revendications

1. Dispositif à canal, comprenant :
un canal allongé comprenant une première extrémité et une seconde extrémité ;
au moins deux électrodes, chaque électrode étant disposée près de l'une desdites extrémités ; et
au moins une source d'énergie disposée pour une communication électrique avec lesdites électrodes et apte à fonctionner pour appliquer simultanément un potentiel continu le long d'au moins une portion dudit canal et un potentiel alternatif le long d'au moins une portion dudit canal ;
dans lequel ledit canal est configuré pour amener un champ électrique établi par l'application desdits potentiels à former un gradient de champ au niveau d'une ou plusieurs régions au sein du canal ayant une intensité de champ qui, lors du chargement d'un échantillon contenant un analyte polarisable dans l'une desdites extrémités de canal, attire ou repousse l'analyte polarisable.

2. Dispositif selon la revendication 1, dans lequel au moins un gradient de champ ainsi formé attire l'analyte polarisable.

3. Dispositif selon la revendication 1 ou la revendication 2, dans lequel ledit canal a une aire variable en coupe transversale faite selon un plan normal à un axe longitudinal dudit canal; ladite aire en coupe transversale étant inférieure à 1 micromètre en largeur en une région la plus étroite du canal.

4. Dispositif selon l'une quelconque des revendications précédentes, dans lequel ledit canal a une aire constante en coupe transversale faite selon un plan normal à un axe longitudinal dudit canal; ladite aire en coupe transversale étant inférieure à 1 micromètre.

5. Dispositif selon l'une quelconque des revendications précédentes, dans lequel ledit canal comprend une rainure formée dans une plaque ou pastille.

6. Dispositif selon l'une quelconque des revendications précédentes, dans lequel au moins un gradient de champ ainsi formé est efficace pour attirer ou repousser un analyte polarisable de moins de 1 micromètre en largeur dans sa dimension la plus longue.

7. Dispositif selon la revendication 6, dans lequel ledit au moins un gradient de champ ainsi formé est efficace pour attirer ou repousser un analyte polarisable comprenant une biomolécule sous-cellulaire.

8. Dispositif selon la revendication 6 ou la revendication 7, dans lequel ledit au moins un gradient de champ ainsi formé est efficace pour attirer ou repousser un analyte polarisable comprenant un polynucléotide.

9. Dispositif selon l'une quelconque des revendications précédentes, dans lequel ladite au moins une source d'énergie est sélectionnable entre au moins deux conditions, comprenant (i) une première condition dans laquelle un champ continu est appliqué dans une première orientation, et (ii) une seconde condition dans laquelle ledit champ continu est appliqué dans une seconde orientation, qui est l'inverse de la première orientation.

10. Dispositif selon l'une quelconque des revendications 1 à 8, dans lequel ladite au moins une source d'énergie est sélectionnable entre au moins deux conditions, comprenant (i) une première condition dans laquelle lesdits potentiels continu et alternatif sont appliqués individuellement, un à la fois, et (ii) une seconde condition dans laquelle lesdits potentiels continu et alternatif sont appliqués de concert, les deux en même temps.

11. Dispositif selon l'une quelconque des revendications précédentes, dans lequel ladite au moins une source d'énergie comprend un générateur continu et un générateur alternatif.

12. Dispositif selon l'une quelconque des revendications précédentes, dans lequel ladite au moins une source d'énergie et lesdites au moins deux électrodes sont adaptées pour appliquer ledit potentiel alternatif superposé à au moins une portion dudit potentiel continu.

13. Dispositif selon l'une quelconque des revendications précédentes, comprenant en outre une pluralité d'électrodes agencées en des emplacements espacés le long du canal et communiquant avec ladite au moins une source d'énergie de sorte que des paires adjacentes de ladite pluralité d'électrodes peuvent établir des champs alternatifs locaux en des emplacements respectifs au sein du canal.

14. Dispositif selon l'une quelconque des revendications précédentes, dans lequel le canal comprend un ou plusieurs îlots s'étendant dans le canal, les îlots étant configurés pour contribuer à la formation dudit gradient de champ.

15. Dispositif selon la revendication 14, dans lequel au moins l'un des un ou plusieurs îlots est en forme générale de larme.

16. Dispositif selon l'une quelconque des revendications précédentes, comprenant en outre une structure de paroi définissant des frontières pour ledit canal, la structure de paroi comprenant une ou plusieurs particularités de surface configurées pour contribuer à la formation dudit gradient de champ.

17. Dispositif selon la revendication 16, dans lequel lesdites particularités de surface sont configurées pour induire la formation de gradients de champ en des emplacements adjacents à celles-ci.

18. Dispositif selon la revendication 16 ou la revendication 17, dans lequel ladite structure de paroi est composée en un matériau isolant.

19. Dispositif selon la revendication 18, dans lequel ledit matériau est choisi dans le groupe constitué par une matière plastique, le verre, le silicium oxydé et toute combinaison de ceux-ci.

20. Dispositif selon l'une quelconque des revendications 16 à 19, dans lequel lesdites particularités de surface définissent une ou plusieurs formes choisies dans le groupe constitué par des bords, des coins, des angles, des bosses, des crevasses, des saillies, des dents, des ondulations, des dentelures, des encoches, des protubérances, des indentations, des ondes, des rides, des ailettes, des tiges, des cônes, des pointes et toute combinaison de ceux-ci.

21. Dispositif selon l'une quelconque des revendications 16 à 20, dans lequel lesdites particularités de surface définissent une topographie généralement ondulante le long de ladite structure de paroi.

22. Dispositif selon l'une quelconque des revendications 16 à 20, dans lequel lesdites particularités de surface définissent une topographie généralement en dents de scie ou dentelée le long de ladite structure de paroi.

23. Dispositif selon l'une quelconque des revendications 16 à 20, dans lequel lesdites particularités de surface définissent une topographie généralement de type onde le long de ladite structure de paroi.

24. Dispositif selon l'une quelconque des revendications 16 à 20, dans lequel lesdites particularités de surface définissent une topographie généralement ridée le long de ladite structure de paroi.

25. Dispositif selon l'une quelconque des revendications précédentes, comprenant en outre un second canal allongé comprenant une première extrémité et une seconde extrémité, ledit second canal croisant le premier canal.

26. Dispositif selon la revendication 25, dans lequel les canaux se croisant définissent une intersection de format en T.

27. Dispositif selon la revendication 25, dans lequel les canaux se croisant définissent un ou plusieurs coins disposés de manière à contribuer à la formation du gradient de champ.

28. Dispositif selon la revendication 27, dans lequel au moins un coin définit un angle droit.

29. Dispositif selon la revendication 27, dans lequel au moins un coin définit un angle oblique.

30. Dispositif selon la revendication 25, dans lequel les canaux se croisant définissent une intersection en forme générale de Y.

31. Dispositif selon l'une quelconque des revendications 25 à 30, dans lequel un ou les deux canaux comprennent une ou plusieurs régions d'aire variable en coupe transversale faite selon un plan normal à un axe longitudinal du canal, configurées pour contribuer à la formation du gradient de champ.

32. Dispositif selon la revendication 31, dans lequel au moins une région d'aire variable en coupe transversale comprend un étranglement.

33. Dispositif selon l'une quelconque des revendications 16 à 32, dans lequel lesdites particularités de surface sont situées le long d'une paroi dudit canal et une paroi opposée dudit canal est dépourvue de telles particularités de surface.

34. Dispositif selon la revendication 33, dans lequel une ligne courant longitudinalement le long de ladite paroi opposée est généralement droite ou légèrement courbée.

35. Dispositif selon l'une quelconque des revendications précédentes, comprenant en outre un réservoir positionné adjacent et disposé pour une communication avec lesdites une ou plusieurs desdites extrémités.

36. Dispositif selon la revendication 16, dans lequel lesdites particularités de surface sont configurées pour induire une formation de gradient de champ en des emplacements définis au sein du canal lors de l'application d'un champ électrique établi par l'application desdits potentiels, de sorte que, lors du chargement d'un échantillon contenant un analyte polarisable dans ledit canal, l'analyte polarisable soit focalisé par ledit champ vers un ou plusieurs emplacements définis au sein du canal.

37. Dispositif selon la revendication 36, dans lequel ledit analyte polarisable est focalisé vers pas plus de trois emplacements définis au sein du canal.

38. Dispositif selon la revendication 36 ou la revendication 37, comprenant en outre un orifice d'accès permettant une communication avec au moins l'un desdits emplacements définis.

39. Dispositif selon la revendication 38, dans lequel ledit orifice d'accès comprend une fermeture pouvant fonctionner entre au moins deux conditions, comprenant (i) une condition ouverte et (ii) une condition fermée.

40. Procédé de purification d'un échantillon contenant un analyte polarisable cible et un ou plusieurs contaminants, comprenant les étapes consistant à : charger ledit échantillon dans un dispositif à canal comprenant un canal allongé ; appliquer des potentiels alternatif et continu le long d'au moins des portions du canal, les potentiels étant appliqués simultanément pendant au moins une portion de ladite application, de telle sorte qu'un ou plusieurs gradients de champ soient formés au sein du canal, lesdits gradients de champ amenant l'analyte cible dans l'échantillon à migrer vers, et à se concentrer en une ou plusieurs régions localisées au sein du canal ; dans lequel ladite application est efficace pour réduire la concentration de contaminants par rapport à la concentration de l'analyte cible, produisant ainsi un analyte purifié.

41. Procédé selon la revendication 40, dans lequel un ou plusieurs desdits gradients de champ définissent lesdites une ou plusieurs régions localisées vers lesquelles ledit analyte cible migre.

42. Procédé selon la revendication 40 ou la revendication 41, dans lequel ledit canal a une aire variable en coupe transversale faite selon un plan normal à un axe longitudinal du canal ; ladite aire en coupe transversale étant inférieure à 1 micromètre en une région la plus étroite du canal.

43. Procédé selon la revendication 40 ou la revendication 41, dans lequel ledit canal a une aire constante en coupe transversale faite selon un plan normal à un axe longitudinal du canal ; ladite aire en coupe transversale étant inférieure à 1 micromètre.

44. Procédé selon l'une quelconque des revendications 40 à 43, dans lequel l'analyte comprend une ou plusieurs biomolécules sous-cellulaires.

45. Procédé selon l'une quelconque des revendications 40 à 44, dans lequel l'analyte comprend un ou plusieurs polynucléotides.

46. Procédé selon la revendication 45, dans lequel ledit polynucléotide comprend un ou plusieurs fragments d'ADN ou d'ARN.

47. Procédé selon l'une quelconque des revendications 40 à 46, dans lequel ledit potentiel continu est formé en utilisant un générateur continu et ledit potentiel alternatif est formé en utilisant un générateur alternatif.

48. Procédé selon l'une quelconque des revendications 40 à 47, dans lequel ledit potentiel alternatif est superposé à au moins une portion dudit potentiel continu.

49. Procédé selon l'une quelconque des revendications 40 à 48, dans lequel une pluralité de potentiels alternatifs sont formés au sein du canal en des positions espacées respectives le long d'une paroi du canal.

50. Procédé selon l'une quelconque des revendications 40 à 49, dans lequel un ou plusieurs îlots sont disposés en des emplacements au sein du canal, et lesdits un ou plusieurs gradients de champ sont formés près desdits îlots.

51. Procédé selon l'une quelconque des revendications 40 à 50, dans lequel ledit canal comprend une structure de paroi définissant des frontières pour celui-ci, et lesdits un ou plusieurs gradients de champ sont formés en des emplacements près de ladite structure de paroi.

52. Procédé selon la revendication 51, dans lequel ladite structure de paroi est composée en un matériau isolant.

53. Procédé selon la revendication 51 ou la revendication 52, dans lequel ladite structure de paroi comprend une ou plusieurs particularités de surface, et lesdits un ou plusieurs gradients de champ sont formés en des emplacements près desdites particularités de surface.

54. Procédé selon la revendication 53, dans lequel lesdites particularités de surface sont situées sur une paroi dudit canal, et une paroi opposée dudit canal est dépourvue de telles particularités de surface.

55. Procédé selon l'une quelconque des revendications 40 à 54, dans lequel ledit dispositif à canal comprend au moins deux canaux allongés, l'un desdits canaux croisant un autre desdits canaux.

56. Procédé selon la revendication 55, dans lequel lesdits un ou plusieurs gradients de champ sont formés près d'un ou plusieurs coins définis par les canaux se croisant.

57. Procédé selon l'une quelconque des revendications 40 à 56, dans lequel ledit canal comprend une ou plusieurs régions d'aire variable en coupe transversale faite selon un plan normal à un axe longitudinal du canal ; et ledit gradient de champ est formé près desdites une ou plusieurs régions d'aire variable en coupe transversale.

58. Procédé selon l'une quelconque des revendications 40 à 57, dans lequel ledit dispositif à canal comprend en outre un ou plusieurs réservoirs, chacun disposé pour une communication fluidique avec une extrémité dudit canal ; et ledit chargement comprend le placement de l'échantillon dans un tel réservoir.

59. procédé selon la revendication 58, comprenant en outre le placement d'une solution tampon dans un autre tel réservoir.

60. Procédé selon l'une quelconque des revendications 40 à 59, comprenant en outre une électrophorèse de l'analyte purifié, résolvant ainsi l'analyte en une ou plusieurs zones d'analytes.

61. Procédé selon l'une quelconque des revendications 40 à 60, comprenant en outre la récupération de l'analyte purifié.

62. Procédé selon l'une quelconque des revendications 40 à 61, dans lequel lesdits gradients de champ sont formés le long d'un côté dudit canal et un côté opposé du canal est dépourvu de tels gradients, de sorte que l'analyte cible est attiré vers et se concentre le long d'une région marginale dudit canal le long dudit premier côté.

63. Procédé selon la revendication 62, comprenant en outre l'étape consistant à diriger l'analyte cible concentré dudit premier côté dans une première région de collecte.

64. Procédé selon la revendication 63, comprenant en outre l'étape consistant à diriger les composants d'échantillons non attirés vers ladite région marginale dans une seconde région de collecte, séparée de ladite première région de collecte.

65. Procédé selon l'une quelconque des revendications 40 à 64, comprenant en outre l'interruption du potentiel alternatif et, avec le potentiel alternatif interrompu, l'inversion du potentiel continu, amenant ainsi l'analyte cible concentré à migrer en sens inverse.

66. Procédé selon la revendication 65, comprenant en outre, après inversion du potentiel continu et avoir laissé l'analyte cible migrer en sens inverse, la collecte de l'analyte cible.

67. Dispositif à canal comprenant :
un canal principal ayant une première extrémité et une seconde extrémité, une région de chargement disposée pour une communication fluidique avec ladite première extrémité, une première région de collecte disposée pour une communication fluidique avec ladite seconde extrémité, un canal secondaire ayant une extrémité d'entrée disposée pour une communication fluidique avec ledit canal principal en une région plus proche de ladite seconde extrémité que de ladite première extrémité, et une seconde région de collecte disposée pour une communication fluidique avec une extrémité de sortie dudit canal secondaire ;
au moins trois électrodes, chaque électrode étant disposée près d'une région respective desdites régions de chargement, de première collecte et de seconde collecte ; et
au moins une source d'énergie disposée pour une communication électrique avec lesdites électrodes et pouvant fonctionner pour appliquer simultanément un potentiel continu le long d'au moins une portion desdits deux canaux et un potentiel alternatif le long d'au moins une portion dudit canal principal;
dans lequel ledit canal principal est configuré pour amener un champ électrique établi par application desdits potentiels à former un gradient de champ en plusieurs régions au sein du canal, lesdits gradients de champ ayant une intensité de champ qui, lors du chargement d'un échantillon contenant un analyte polarisable dans ladite région de chargement, attire ou repousse l'analyte polarisable.

68. Dispositif selon la revendication 67, dans lequel ledit canal principal comprend une pluralité de paires d'électrodes disposées en des emplacements espacés sur sa longueur, chaque paire étant adaptée pour générer un champ alternatif respectif au sein d'une région adjacente du canal principal.

69. Dispositif selon la revendication 67 ou la revendication 68, dans lequel ledit canal principal comprend une structure de paroi définissant des frontières pour celui-ci, ladite structure de paroi comprenant des particularités de surface définissant une ou plusieurs formes choisies dans le groupe constitué par des bords, des coins, des angles, des bosses, des crevasses, des saillies, des dents, des ondulations, des dentelures, des encoches, des protubérances, des indentations, des ondes, des rides, des ailettes, des tiges, des cônes,dles pointes et toute combinaison de ceux-ci.

70. Dispositif selon la revendication 69, dans lequel ladite structure de paroi est formée sur une paroi dudit canal et une paroi opposée dudit canal est dépourvue d'une telle structure de paroi.

71. Dispositif selon la revendication 69, dans lequel ladite structure de paroi est formée sur plus d'une paroi dudit canal.

72. Dispositif selon l'une quelconque des revendications 67 à 71, dans lequel ledit canal comprend une rainure formée dans une plaque ou pastille.

73. Dispositif selon l'une quelconque des revendications 67 à 71, dans lequel ladite région de chargement comprend un réservoir de chargement, ladite première région de collecte comprend un réservoir de déchets et ladite seconde région de collecte comprend un réservoir d'analyte purifié.

74. Dispositif selon l'une quelconque des revendications 1 à 39 ou 67 à 73, comprenant :
au moins un canal allongé comprenant une première extrémité et une seconde extrémité et ayant une aire moyenne en coupe transversale, et une région de pincement ayant une aire en coupe transversale qui est inférieure à l'aire moyenne en coupe transversale ;
dans lequel ledit canal est configuré pour amener un champ électrique établi par application desdits potentiels à former un gradient de champ au niveau de ladite région de pincement au sein du canal ayant une intensité de champ qui, lors du chargement d'un échantillon contenant un analyte polarisable dans l'une desdites extrémités de canal, attire ou repousse l'analyte polarisable.

75. Dispositif selon la revendication 74, dans lequel ledit au moins un canal allongé comprend au moins deux canaux qui se croisent.

76. Dispositif selon la revendication 74 ou la revendication 75, dans lequel ledit au moins un canal allongé comprend un canal de séparation et un canal latéral qui croise ledit canal de séparation, dans lequel la région de pincement est située dans le canal latéral.

77. Dispositif selon la revendication 76, dans lequel le canal latéral a une première longueur et le canal de séparation a une seconde longueur qui est plus longue que la première longueur.

78. Dispositif de purification configuré pour purifier un échantillon contenant un analyte polarisable cible et un ou plusieurs contaminants, comprenant un dispositif à canal selon la revendication 1.
